# EUROPEAN PATENT APPLICATION

(11) **EP 1 677 245 A1**
(43) Date of publication of application: **05.07.2006**
(21) Application number: 05258085.9
(22) Date of filing: 28.12.2005
(51) Int. Cl.: G06Q 30/00

(54) **Contents providing system, client device, server and program**

(30) Priority: 28.12.2004 JP 2004381919; 28.12.2004 JP 2004381922
(71) Applicant: Brother Kogyo Kabushiki Kaisha, Nagoya-shi, Aichi-ken 467-8561 (JP)
(72) Inventor: Ohara, Kiyotaka, c/o Brother Kogyo K.K., Nagoya-shi, Aichi-ken 467-8562 (JP); Matsuda, Makoto, c/o Brother Kogyo K.K., Nagoya-shi, Aichi-ken 467-8562 (JP)
(74) Representative: Smith, Samuel Leonard

(57) **Abstract**

A contents providing system includes a printing device capable of printing contents data on a recording medium, a server capable of performing a data communication with the printing device, the server being configured to transmit the contents data to the printing device. The printing device includes a storage unit configured to store all the contents data received from the server, and a printing unit configured to print out the contents stored in the storage unit. The server includes a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed.

## Description

### Cross-Reference to Related Applications

This application claims priority from Japanese Patent Applications No. 2004-381919 and No. 2004-381922, both filed on December 28, 2004. The entire subject matter of the applications is incorporated herein by reference.

### Background

### Technical Field

Aspects of the present invention relate to a content providing system configured such that contents are provided from a server to a client device, and that the client device can use the thus provided contents.

### Description of Related Art

Recently, various services that provide contents from a server to a client, via a network, have been developed. Further, for such services, various techniques for collecting fees for such services have been suggested.

Japanese Patent Provisional Publication No. P2001-357312A (referred to as '312 publication, hereinafter) discloses an example of such a technique. According to the '312 publication, a server that provides contents receives a request from a client (e.g., a game device) for contents. Then, the server transmits the requested contents (e.g., a certain file) to the game device in response to the request. After receipt of notification from the client, which notification indicates the client has received the contents, the server charges the user of the client device for the provided contents.

According to the above configuration, however, the contents provided to the client can be used as they are. For example, of the contents are to be printed on the client side, the contents may not be provided appropriately. That is, only the receipt of the data on the client side may be insufficient to charge the user. If there is some trouble and the contents cannot be printed appropriately, there occurs a situation where, although the fees are charged to the user, the contents have not been provided appropriately. In a worse case, if the client requests the contents again due to the above trouble, the client may be charged again for retransmission of the contents.

Japanese Patent Provisional Publication No. P2001-195224A (referred to as '224 publication, hereinafter) discloses a system that charges the user after the provided contents are successfully printed on the client side. Specifically, according to '224 publication, the client generates print data and transmit the same to a server. Then, the server transmits the print data to a printing device. The printing device prints out the received print data, and, on completion, transmits information regarding a printing cost to the server. The server, based on the cost information, determines an actual printing cost, and charges the cost to the user of the client.

Regarding the printing of contents, even if the printing operation has not been completed successfully, the portions having been printed can be used. Thus, if a user of a malicious user intentionally causes an error just before completion of a printing job of such contents, most of them can be used as if they are printed normally, and the fees for the contents will not be charged. Is should be noted that various troubles may occur in printing devices, and it is difficult to for the server side to determine whether a printing error occurs due to an actual error or the error is intentionally caused.

### Summary

Aspects of the invention are advantageous in that the contents can be provided appropriately and the fees therefore can be charged without fail.

According to aspects of the invention, there is provided a contents providing system including a server and at least one client device, each of the server and the client device being capable of performing a data communication, the contents providing system being configured such that the server is capable of providing contents which can be printed on a recording medium at the client device. The client device includes a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit. Further, the contents requesting unit re-requests the server to provide the contents if the contents judging unit determines that the contents are not printed appropriately. The server includes a charge processing unit configured to execute a charging procedure for a user of the client device after the client device has requested the server to provide the contents, and a contents providing unit configured to provide the contents requested by the client device to the client device when the client device has requested for the contents. When the client device request the server to provide the contents to the client device, if the client device is one to which the server has provided the contents through the contents providing unit before, the contents are provided to the client device without executing the charge procedure by the charge processing unit.

The contents requesting unit may be configured to request the server to provide the contents and to transmit data necessary for generating the contents to the server. Further, the server may include a contents generating unit configured to generate contents, when requested by the client device to provide the contents, based on the data necessary for generating the contents which is transmitted together with the request.

The contents requesting unit may be configured such that, when the client re-requests the server to provide the contents, the data necessary for generating the contents is not transmitted to the server. If a request to provide the contents is received from the client device and the client device is one to which the contents previously generated was provided, the contents providing unit provides the contents previously generated for the client device again.

When the server is requested by the client device to provide the contents, the charge processing unit starts executing the charging procedure for the user of the client device after the data necessary for generating the contents that is transmitted together with the request has been normally received.

When the server receives the request to provide the contents to the client, the contents providing unit starts providing the contents, which is generated based on the data necessary for generating the contents, to the client device after the data necessary for generating the contents, which is transmitted together with the request, has been received.

The server may further include a charge notification unit that notifies the client device of a charged money amount if the charge procedure is executed after the contents have been provided to the client device. The charge procedure by the charge processing unit may be executed only when the client device to which the charged money amount was notified notifies that the contents will be printed on the recording medium. The client device may further include a print operation selection unit configured to allow the user to select whether the contents are to be printed on the recording medium based on the charged money amount notified of by the server after the client device first received the contents from the server that received the request made by the contents requesting unit; and a print notification unit configured to notify the server that the selection has been made by the print operation selection unit to print the contents on the recording medium. Only when the printing of the contents on the recording medium has been selected by the print operation selection unit, the contents printing unit prints the contents on the recording medium.

The contents providing unit may be configured to provide the contents by transmitting the contents to the client device.

The contents may be made accessible by the client device. The contents providing unit may provide the contents to the client device by notifying the client device that the contents are accessible by the client. The client device may further include an accessing unit configured to access the contents when notified by the contents providing unit that the contents are accessible. The contents printing unit may print out the contents accessed by the accessing unit on the recording medium.

According to aspects of the invention, there is provided a client device for a contents providing system including a server and the client device, each of the server and the client device being capable of performing a data communication, the contents providing system being configured such that the server is capable of providing contents which can be printed on a recording medium at the client device, the server including a charge processing unit configured to execute a charging procedure for a user of the client device after the client device has requested the server to provide the contents, and a contents providing unit configured to provide the contents requested by the client device to the client device when the client device has requested for the contents, the server being configured such that, when the client device request the server to provide the contents to the client device, if the client device is one to which the server has provided the contents through the contents providing unit before, the contents are provided to the client device without executing the charge procedure by the charge processing unit. The client device may include a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit. The contents requesting unit may re-request the server to provide the contents if the contents judging unit determines that the contents are not printed appropriately,

According to aspects of the invention, there is also provided a server for a contents providing system including the server and at least one client device, each of the server and the client device being capable of performing a data communication, the contents providing system being configured such that the server is capable of providing contents which can be printed on a recording medium at the client device, the client device including a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit, the contents requesting unit being configured to re-requesting the server to provide the contents if the contents judging unit determines that the contents are not printed appropriately. The server may include a charge processing unit configured to execute a charging procedure for a user of the client device after the client device has requested the server to provide the contents, and a contents providing unit configured to provide the contents requested by the client device to the client device when the client device has requested for the contents. When the client device request the server to provide the contents to the client device, if the client device is one to which the server has provided the contents through the contents providing unit before, the contents are provided to the client device without executing the charge procedure by the charge processing unit.

According to aspects of the invention, there is further provided a program product having a computer readable instructions that cause a computer to serve as a client device for a contents providing system including a server and the client device, each of the server and the client device being capable of performing a data communication, the contents providing system being configured such that the server is capable of providing contents which can be printed on a recording medium at the client device, the server including a charge processing unit configured to execute a charging procedure for a user of the client device after the client device has requested the server to provide the contents, and a contents providing unit configured to provide the contents requested by the client device to the client device when the client device has requested for the contents, the server being configured such that, when the client device request the server to provide the contents to the client device, if the client device is one to which the server has provided the contents through the contents providing unit before, the contents are provided to the client device without executing the charge procedure by the charge processing unit. The client device includes a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit. The contents requesting unit re-requests the server to provide the contents if the contents judging unit determines that the contents are not printed appropriately,

A program product comprising a computer readable instructions that cause a computer to serve as a server for a contents providing system including the server and at least one client device, each of the server and the client device being capable of performing a data communication, the contents providing system being configured such that the server is capable of providing contents which can be printed on a recording medium at the client device, the client device including a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit, the contents requesting unit being configured to re-requesting the server to provide the contents if the contents judging unit determines that the contents are not printed appropriately. The server may include a charge processing unit configured to execute a charging procedure for a user of the client device after the client device has requested the server to provide the contents, and a contents providing unit configured to provide the contents requested by the client device to the client device when the client device has requested for the contents. When the client device request the server to provide the contents to the client device, if the client device is one to which the server has provided the contents through the contents providing unit before, the contents are provided to the client device without executing the charge procedure by the charge processing unit.

According to aspects of the invention, there is provided a contents providing system including a printing device capable of printing contents data on a recording medium, a server capable of performing a data communication with the printing device, the server being configured to transmit the contents data to the printing device. The printing device includes a storage unit configured to store entire contents data received from the server, and a printing unit configured to print out the contents stored in the storage unit. The server includes a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed. The entire contents data may be transmitted from the server in one transmission operation.

The judging unit may determine that the reception of the contents data by the printing unit has been completed when transmission of the contents data to the printing unit has been completed.

The printing device may include a reception notifying unit configured to notify the server of completion of reception of the contents data, and the judging unit may determine that the reception of the contents data by the printing unit has been completed when the notification from the reception notifying unit is received.

The server may include a print allowing unit that transmits print allowing data for allowing printing of the contents on the recording medium when the charging procedure regarding the contents data is executed by the charge process unit, and the printing unit may be configured to be enabled to print the contents for which the charging procedure has been executed after the print allowing data has been received form the server.

The storage unit may include a non-volatile storage medium.

According to aspects of the invention, there is also provided a printing device for a contents providing system including the printing device capable of printing contents data on a recording medium, a server capable of performing a data communication with the printing device, the server being configured to transmit the contents data to the printing device, the server including a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed. The printing device may include a storage unit configured to store all the contents data received from the server, and a printing unit configured to print out the contents stored in the storage unit,

According to aspects, there is provided a server for a contents providing system including a printing device capable of printing contents data on a recording medium, the server capable of performing a data communication with the printing device, the server being configured to transmit the contents data to the printing device, the printing device including a storage unit configured to store all the contents data received from the server, and a printing unit configured to print out the contents stored in the storage unit. The server may include a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed.

According to aspects, there is provided a program product comprising a computer readable instructions that cause a computer to serve as a printing device for a contents providing system including the printing device capable of printing contents data on a recording medium, a server capable of performing a data communication with the printing device, the server being configured to transmit the contents data to the printing device, the server including a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed. The printing device includes a storage unit configured to store all the contents data received from the server, and a printing unit configured to print out the contents stored in the storage unit,

According to aspects of the invention, there is also provided a program product comprising a computer readable instructions that cause a computer to serve as a server for a contents providing system including a printing device capable of printing contents data on a recording medium, the server capable of performing a data communication with the printing device, the server being configured to transmit the contents data to the printing device, the printing device including a storage unit configured to store all the contents data received from the server, and a printing unit configured to print out the contents stored in the storage unit. The server includes a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed.

### Brief Description of the Accompanying Drawings

Fig. 1 is a block diagram showing a configuration of a service providing system according to aspects of a first embodiment of the invention.
Fig. 2 shows a configuration of an operation unit.
Fig. 3 is a flowchart illustrating an MFP operation according to aspects of the first embodiment of the invention.
Figs. 4A -4C show selection windows according to aspects of the first embodiment.
Fig. 5 is a flowchart illustrating a session procedure according aspects of the first embodiment of the invention.
Figs. 6 and 7 show a flowchart illustrating a copy application job according to aspects of the first embodiment of the invention.
Figs. 8A-8D show parameter input windows according aspects of the first embodiment of the invention.
Fig. 9 is a flowchart illustrating a service output information requesting procedure according to aspects of the first embodiment of the invention.
Fig. 10 shows a flowchart illustrating a service output information deleting procedure according to aspects of the first embodiment of the invention.
Fig. 11 shows a session selection window according to aspects of the first embodiment of the invention.
Fig. 12 shows a flowchart illustrating a function server procedure executed by a function server, according to aspects of the first embodiment of the invention.
Fig. 13 is a flowchart illustrating a session procedure executed by the function server according to aspects of the first embodiment of the invention.
Figs. 14 and 15 show a copy application procedure executed by the function server according to aspects of the first embodiment of the invention.
Fig. 16 shows a data structure of session management information according to aspects of the first embodiment of the invention.
Fig. 17 shows a flowchart illustrating a charge information updating procedure executed by the function server, according to aspects of the first embodiment of the invention.
Fig. 18 shows a data structure of charge information according to aspects of the first embodiment of the invention.
Fig. 19 shows a flowchart illustrating a service output information transmission procedure according to aspects of the first embodiment of the invention.
Fig. 20 is a block diagram schematically showing a configuration of a printing system according to a second illustrative embodiment.
Fig. 21 is a table showing data structure of charge information stored in a charge information storage unit of the function server.
Fig. 22 is a flowchart illustrating a service usage procedure according to aspects of the second illustrative embodiment.
Fig. 23 is a flowchart illustrating an output information transmission requesting procedure according to aspects of the second illustrative embodiment.
Fig. 24 is a flowchart illustrating an output information deletion requesting procedure according to aspects of the second illustrative embodiment.
Fig. 25 is a flowchart illustrating a translation copy procedure according to aspects of the second illustrative embodiment.
Fig. 26 shows a table showing data structure of session management information stored in a session management information storage unit of the function server according to aspects of the second illustrative embodiment.
Fig. 27 is a flowchart illustrating an output information transmitting procedure according to aspects of the second illustrative embodiment.
Fig. 28 is a flowchart illustrating an output information deleting procedure according to aspects of the second illustrative embodiment.
Fig. 29 is a flowchart illustrating a charge information updating procedure according to aspects of the second illustrative embodiment.

### Detailed Description of the Embodiments

Hereinafter, referring to accompanying drawings, two illustrative embodiments and their modifications will be described.

### First Illustrative Embodiment

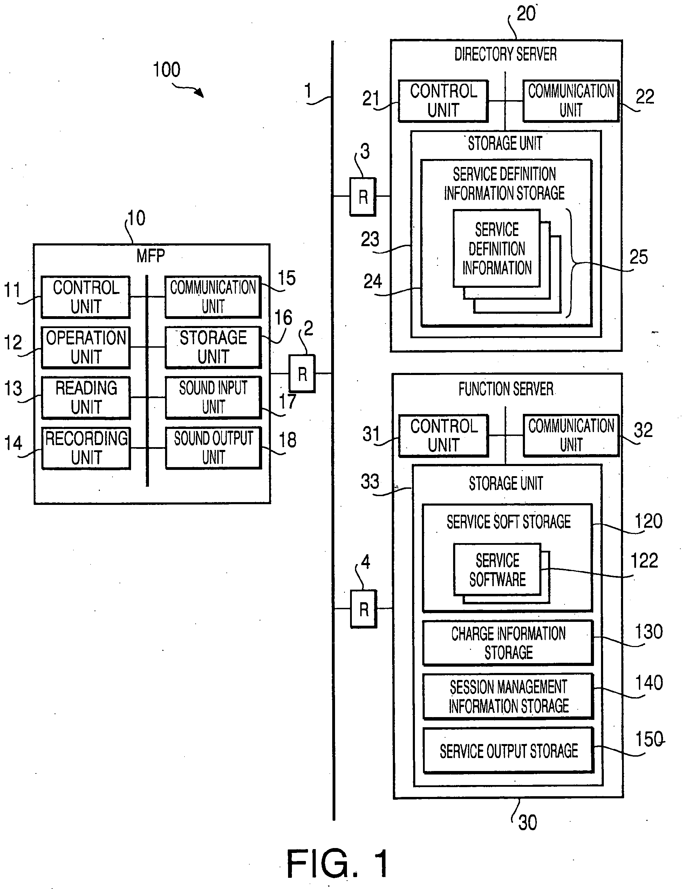

Fig. 1 is block diagram showing a configuration of a service providing system according to aspects of a first illustrative embodiment of the invention.

As shown in Fig. 1, the service providing system includes an MFP (Multi Function Peripheral) 10, a directory server 20 and a function server 30, which are interconnected through a network (e.g., WAN: Wide Area Network) 1 so that data communication can be performed therebetween. Specifically, the MFP 10, the directory server 20 and the function server 30 are connected to the network 1 through routers (R: broadband routers) 2-4, respectively.

The MFP 10 includes a control unit 11, an operation unit 12, a reading unit 13, a recording unit 14, a communication unit 15, a storage unit 16, a sound input unit 17 and a sound output unit 18.

The CPU 11 includes a CPU, a ROM (Read Only Memory), and a RAM (Random Access Memory). The CPU executes programs stored in the ROM and controls the entire operation of the MFP 10.

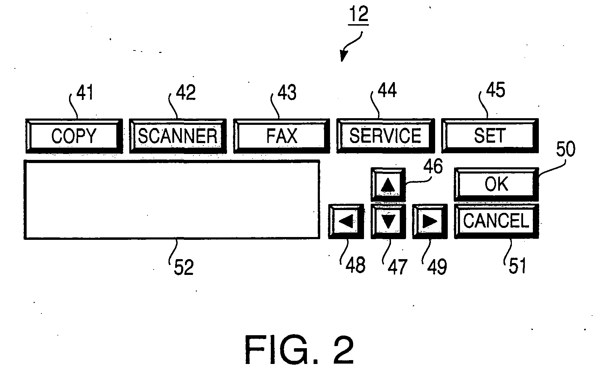

The operation unit 12, as shown in Fig. 2, a copy key 41, a scanner key 42, a FAX key 43, a service key 44, a set key 45, up/down/right/left cursor keys 46, 47, 48 and 49, an OK key 50, a cancel key 51 and a display 52, and serves as a user interface.

The reading unit 13 is an input device functions as a scanner. The reading unit 13 reads an image formed on a sheet-type recording medium (e.g., paper) and generates image data representing the scanned image.

The recording unit 14 is an outputting device functions as a printer. The recording unit is configured to form (print) images on a sheet-type recording medium (paper).

The communication unit 14 is configured to connects the MFP 10 to the network 1, and further functions to transmit/receive data through the network 1.

The storage unit 16 includes a non-volatile RAM (not shown) and configured to store data therein. The sound input unit 17 acquire sound input through a microphone provided to a handset (not shown) provided to the MFP 10, and generates sound data (e.g., PCM data) representing the input sound. The sound output unit 18 outputs sound from the handset and/or a speaker (not shown) provided to the MFP 10 in accordance with the sound data (PCM data).

The directory server 20 includes a control unit 21, a communication unit 22 and the storage unit 23.

The control unit 21 includes a CPU, a ROM and a RAM. The CPU executes programs stored in the ROM and RAM to control entire operation of the directory server 20.

The communication unit 22 is configured to connect the directory server 20 to the network 1, and further transmits/receives data through the network 1.

The storage unit 23 includes a hard disk drive (not shown), and stores data on the hard disk. The storage unit 23 is provided with a service definition information storage 24 for storing service definition information 25. The service definition information 25 is XML data described with XML (eXtensible Markup Language). By display a service selection window in accordance with description of the service definition information 25, a list of services (e.g., types of services and requesting addresses (URL: Uniform Resource Locator) that the function server can provide 30 is displayed.

The function server 30 includes a control unit 31, a communication unit 32, and a storage unit 33. The control unit 31 includes a CPU, a ROM and a RAM. The CPU executes programs stored in the ROM and RAM to control entire operation of the function server 30. The control unit 31 is configured to provide sufficiently high performance in comparison with the control unit 11 of the MFP 10 so that procedures which may not be executed by the control unit 11 of the MFP 10 can be processed by the control unit 31 of the function server 30.

The communication unit 32 is configured to connect the function server 30 to the network 1, and further transmits/receives data through the network 1.

The storage 33 includes a hard disk drive (not shown) for storing data thereon. The storage 33 includes a service soft storage 120 for storing service software 122 that provides various services, a charge information storage 130 for storing information necessary of charging fees to users (described later), session management information storage 140 for storing session IDs (described later), and service output storage 150 for storing print data and the like (described later).

### Procedures Executed by the MFP

Hereinafter, various operation executed by the control unit 11 of the MFP 10 will be described.

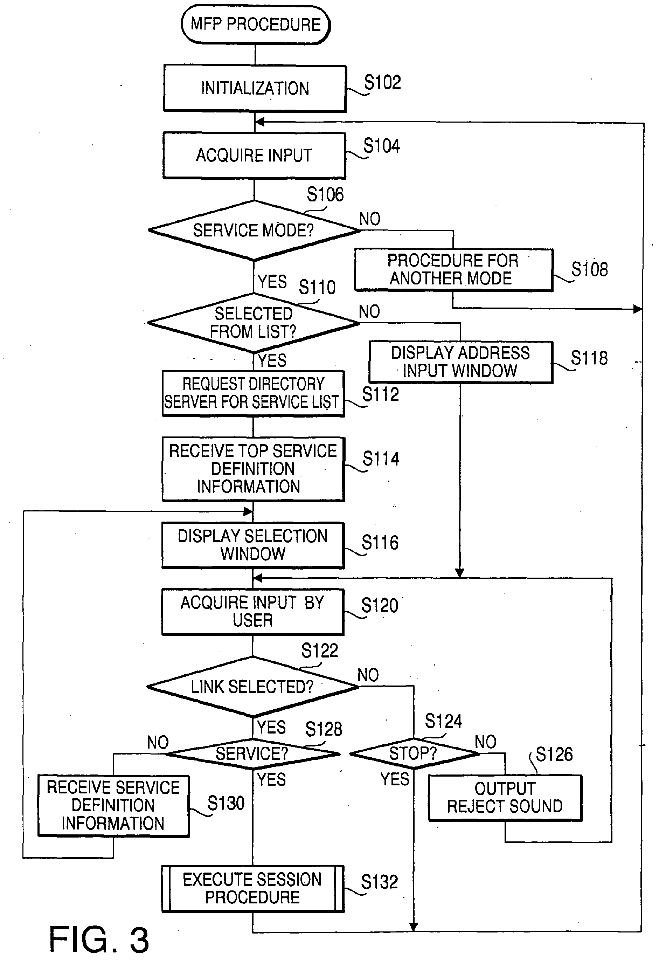

First, referring to Fig. 3, an MFP procedure which is repeatedly executed after the MFP 10 is powered ON will be described.

First, in S102, the control unit 11 executes an initializing process. Then, in S 104, the control unit 11 accepts an input. The input means a command for instructing the MFP 10 to execute a certain process. For example, the input is a key input by a user through the operation unit 12, or a command signal transmitted from an external computer via the network 1.

In S106, the control unit 11 judges whether the command instructions the MFP 10 to change to a service mode. If the command does not instruct the MFP 10 to change to the service mode (S106: NO), control proceeds to S108 where a process for another mode corresponding to the input accepted in S 104 is executed. For example, a print out process for printing out data transmitted from the external computer may be executed in S108. Then, control returns to S104.

If the command instructs the MFP 10 to change to the service mode (S 106: YES), control proceeds to S 110. In S 110, the control unit 11 displays a selection window, requesting a user to decide whether the user selects a desirable service (to be requested to the function server 30) from a list or designates directly a URL of a destination of a desirable service, on the display 52. Then, the control unit 11 waits for a user input. If the user input is accepted, the control unit 11 judges whether a service to be requested to the function server 30 is to be selected from a service list (S 110).

If it is judged that a service to be requested to the function server 30 is to be selected from a service list (S 110: YES), control proceeds to S 112 where the control unit 11 sends a request for a service list to the directory server 20. Specifically, in S110, the control unit 11 requests the service list by sending an HTTP request based on HTTP (Hyper Text Transfer Protocol) 1.1. (hereinafter, simply referred to as an HTTP request) to a destination address stored in the storage unit 16. After receiving the HTTP request from the MFP 10, the directory server 2o sends top service definition information 25 back to the MFP 10 as an HTTP response based on HTTP 1.1. The top service definition information 25 is used by the MFP 10 to display a category selection window allowing a user to select one of service categories including "data storage service", "print service", and "copy application service".

After the MFP 10 receives the top service definition information in S 114, the control unit generates a selection window based on the received service definition information 25 and displays the selection window on the display 52 (S116). Then, control proceeds to S120.

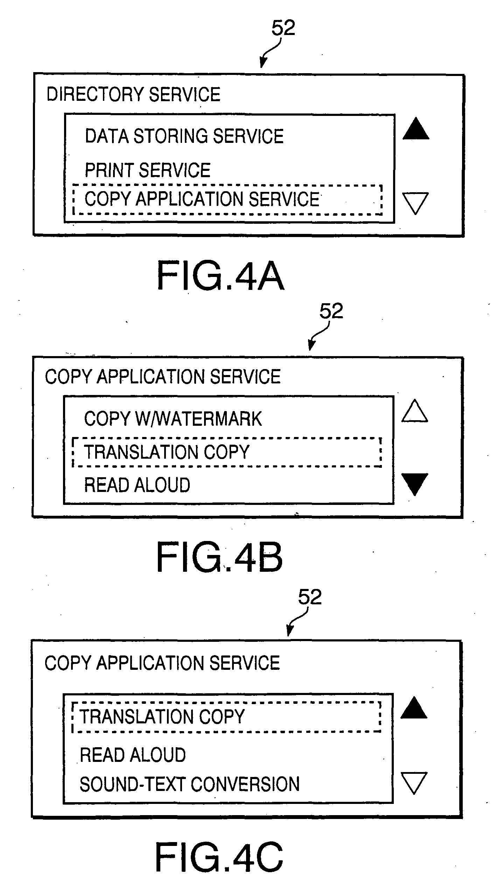

When S 116 is executed after the top service definition information 25 is received by the MFP 10, a category selection window shown in Fig. 4A is displayed on the display 52 of the MFP 10. Specifically, a character string "Directory Service" as a display title is displayed at the top of the window, and character strings "Data Storage Service", "Printing Service" and "Copy Application Service" as items indicating selectable categories are displayed under the display title. Each item on the service selection window has been associated with an ID of service definition information 25 corresponding to each category. By this configuration, when a selection of an item is confirmed by the user, service definition information 25 having the ID associated with the selected item is obtained from the directory server 20.

The MFP 10 displays upward/downward arrows (triangles) on the right side on the display 52 to allow the user to scroll up or down the displayed items if all the items cannot be displayed on the display 52 simultaneously due to the limitations of the size of a display area.

If S 166 is executed after service definition information 25 different from top service definition information 25 is received (e.g., service definition information 25 regarding "Copy Application Service"), a service selection window shown in Fig. 4B or 4C is displayed on the display 52. Specifically, a character string "Copy Application Service" as display title is displayed at the top of the window, and character string "Watermarked Copy", "Translation Copy", "Document Read-aloud" and "Voice-text Conversion" as items indicating selectable - services are displayed under the display title. Each item on the service selection window has been associated with an ID of service definition information 25 of each service or event. By this configuration, when a selection of an item is confirmed by the user, the MFP 10 requests a service corresponding to a selected item from the function server 30.

The MFP 10 displays up/down arrows (triangles) on the right side on the display 52 to allow the user to scroll up or down the displayed items if all the items cannot be displayed on the display 52 simultaneously, due to the limitations of the size of the display area.

If it is judged in S110 that a service to be requested from the function server 30 is not selected from a service list (S 110: NO), control proceeds to step S 118 where control unit 11 generates an address input window for allowing a user to directly input a URL, and displays the input window on the display 52. Then, control proceeds to step S120.

After the service selection window or the address input window is displayed, a user selects one of items, inputs an address or ends the service mode through use of the operation unit 12.

In S120, the control unit 11 waits for a user operation performed via the operation unit 12 on the service selection window or the address input window. If the user operation is performed, control proceeds to S 122 where the control unit 11 judges whether the user operation is an operation for selecting a link. Specifically, in S122, the control unit 11 judges that the user operation is an operation for selecting a link if a selection is made successfully by a user on the service selection window displayed in S 116 or if a URL is successfully input to the input window displayed in S118.

If the user operation is not an operation for selecting a ling (S122: NO), control proceeds to S124 where the control unit 11 judges whether the user operation accepted at S120 is an operation for ending the service mode. If the user operation is an operation for ending the service mode (S124: YES), control returns to S104. That is, in this case the process as a service mode terminates.

If it is judges that the user operation is not an operation for ending the service mode (S 124: NO), control proceeds to S126 where the control unit 11 produces a beeping sound. Then, control returns to S120. That is, if the user operation accepted in S120 is not an operation for selecting a link and is not an operation for ending the service mode, the beep sound is produced so as to notify a user that the user operation is invalid.

If the user operation is an operation for selecting a link (S122: YES), control proceeds to S 128 where the control unit 11 judges whether the selected link is represented by a URL for a service.

If the selected link is not represented by a URL for a service (i.e., the selected link is an ID of the service definition information) (S128: NO), control proceeds to S130 where the control unit 11 requests a service list from the directory server 20, and then receives service definition information 25. Then, control returns to S 116 so as to display a new service selection window on the display 52.

If the selected link is represented by a URL of a service (S128: YES), control proceeds to S 132 where a session process (which is explained in detail later) is executed. After execution of S 132, control returns to S104. The service mode process is thus terminated.

### Session Procedure

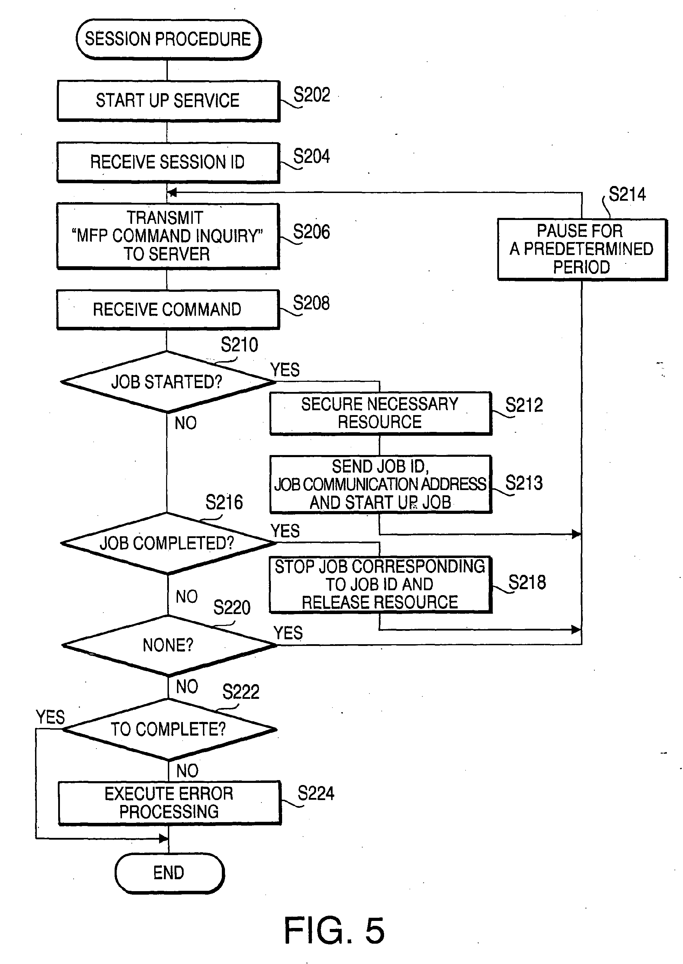

Hereinafter, the session procedure executed in S132 of the MFP procedure (Fig. 3) will be described referring to a flowchart shown in Fig. 5.

At the start of the session process, the MFP 10 activates a service corresponding to a link location selected at S120 (or corresponding to an address if the address is directly input by a user) (S202). The MFP 10 sends a service startup command to the link location as an HTTP request to instruct the function server 30 to initiate a service selected in S120. After receiving the service startup command, the function server 30 sends a session ID back to the MFP 10 as an HTTP response.

In response to the service startup command of S201, the MFP 10 receives a session ID from the function server 30 (S204). Each of HTTP requests and HTTP responses exchanged between the MFP 10 and the function server 30 includes a session ID, and the function server 30 is able to manage devices (i.e., conduct session management) communicating with the function server 30 in accordance with session IDs contained in HTTP requests or HTTP responses.

Subsequently, the MFP 10 transmits the "MFP command inquiry" (inquiring about instructions to the MFP 10) to the function server 30 (S206). After receiving the MFP command inquiry from the MFP 10, the function server 30 sends a command back to the MFP 10 if a command to be sent to the MFP 10 is issued in processes of the function server 30. In response to the MFP command inquiry of S206, the MFP 10 receives a command from the function server 30 (S208).

Subsequently, the MFP 10 judges whether the command received in S208 is a job startup command (S210). The job startup command is issued by the function server 30 after the function server 30 receives the service startup command. The type of a job to be executed by the MFP 10 is decided by the function server based on various factors including timing reception of an inquiry and the type of a service to be initiated. A job ID of the job to be initiated, the type of the job, and a destination address of the job are contained in the job startup command.

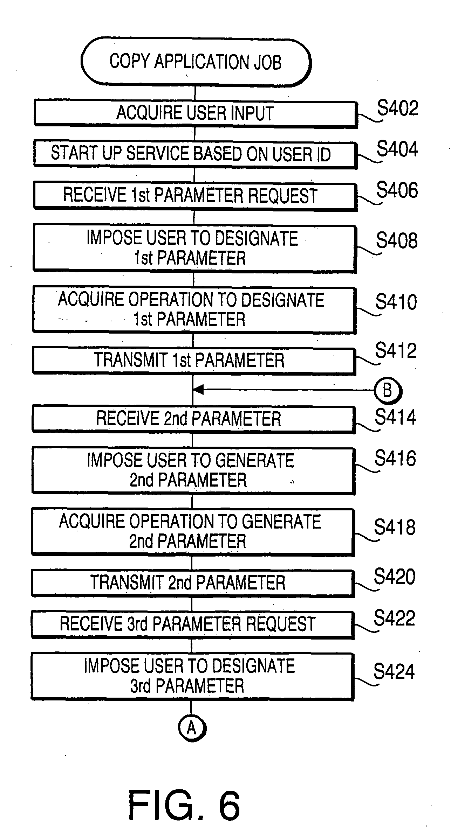

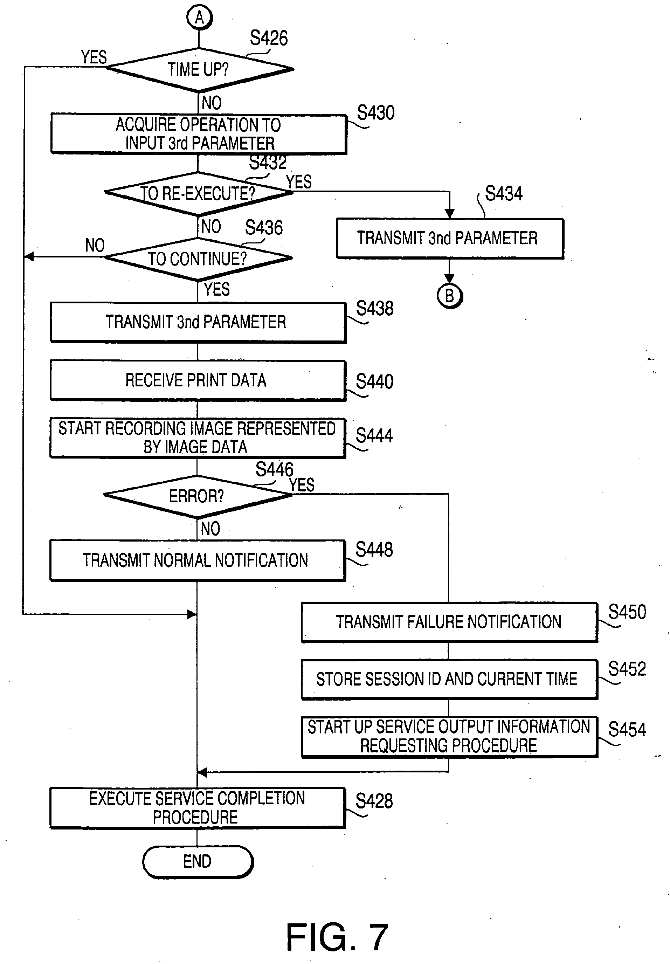

If the command received in S208 is a job startup command (S210: YES), the MFP 10 reserves resources necessary for the startup of the job (S212), and starts a procedure for initiating the designated job (S213). The control unit 11 initiates the designated job by passing the job ID and the destination address. The job thus initiated is executed concurrently with other processes. That is, various services can be performed concurrently in the service providing system. In this embodiment, the "translation copy" of the "copy application services" will be described as an example in detail later, referring to Figs. 6 and 7.

After the job is started, the control unit 11 pauses for a predetermined period (S214), and then returns to S206.

If the command received in S208 is not a job startup command (S208; NO), the MFP 10 judges whether the command is a job end command (S216). The job end command is issued in the function server 30 at the time of termination of the job. A job ID of the terminated job is contained in the job end command.

If the command received in S208 is a job end command (S216: YES), the MFP 10 ends the job corresponding to the job ID while releasing the resources (S208), and pauses for a predetermined period (S214). Then, control returns to S206.

If the command received in S208 is not a job end command (S216), the MFP 10 judges whether the command indicates "no command", that is, whether the response to the MFP command inquiry indicates that there is no command (S220).

If the command received in S208 indicates "no command" (S220: YES), the MFP 10 pauses for the predetermined period (S214), and control returns to S206.

If the command received in S208 does not indicate "no command" (S220: NO), the MFP 10 judges whether the command is a session end command (S222). The session end command is issued in the function server 30 at the time of termination of the service for the MFP 10.

If the command received in S208 is the session end command (S222: YES), the MFP 10 ends the session procedure. If the command received in S208 is not the session end command, that is, if the command is none of the job startup command, the job end command, the "no command" or the session end command (S222: NO), the MFP 10 executes a command error procedure (e.g., displaying an error message on the display 52)(s224). Then, the session procedure terminates.

### Copy Application Job

Next, referring to Figs. 6 and 7, the copy application, which is a job started up in S213 of Fig. 5, will be described.

When the copy application job is started, the control displays an ID input window allowing the user to input ID on the display 52. If the user operates to input the user ID through the operation unit 12 (S402), control starts up the copy application service on the function server 30, based on the user ID (S404). Specifically, the function server 30 is controlled to start up the copy application service by transmitting a service startup command for starting the service, with an HTTP request, to the address for the copy application service represented by the service definition information 25, together with the user ID. Then, the copy application service is started.

When the service startup command is received, the function server 30 returns a response, which is a first parameter request, by the HTTP response together with a session ID. The "first parameter request" is, as describe later, a command to be issued by the function server 30 that receives the service startup command, and is XML data serves as a command to request the MFP 10 for the first parameter (a method of translation in this embodiment).

Next, control receives the first parameter request and session ID (S406) transmitted form the function server 30 in response to the service startup command transmitted in S404. It should be noted that, in the following procedure, the HTTP request and HTTP response are transmitted with the session ID being included, as described above.

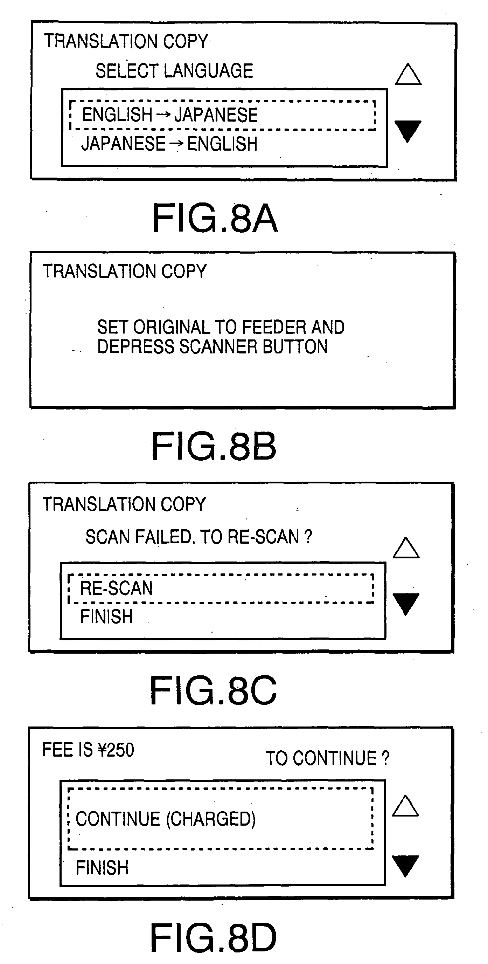

Next, control displays a parameter input window allowing the user to designate the first parameter based on the first parameter request received in S406 to induce the user to designate the first parameter (S408). According to this embodiment, as shown in Fig. 8A, a character string "Translation Copy" is displayed as a display title at an upper area of the display unit 52. Below the title, translation methods "English → Japanese" and "Japanese → English are displayed as the parameter input window. After the parameter input window is displayed, the user can designate one of the items as the first parameter.

After the parameter input window is displayed and the operation to input the first parameter (translation method) is executed (S410); the first parameter is transmitted to the function server 30 by the HTTP request (S412). When the first parameter is received, a second parameter request is returned by the HTTP response from the function server 30. The "second parameter request" is, as will be described in detail later, a command issued by the function server 30 that received the first parameter. Specifically, the second parameter request is XML data serving as a request directed to the MFP 10 to scan an original on which a text is printed to generate image data.

Next, after receiving the second parameter request returned from the function server 30 in response to the first parameter transmitted in S412 (S414), control displays a parameter input window allowing the user to input the second parameter based on the second parameter request, thereby inducing the user to execute operation for generating the second parameter (S416).

According to the embodiment, based on the XML description of the second parameter, a parameter input window is displayed on the display 52. In this window, the character string "Translation Copy" is displayed as a title at an upper portion of the display area as shown in Fig. 8B. Further, on the lower portion, a message indicating that the sheet-type recording medium (i.e., original) on which a text to be translated is printed should be placed at a feeder (i.e., which is device for introducing the sheet-type recording medium to be scanned by the reading unit 13). After the parameter input window is displayed, as the user set the original into the feeder, and depresses the scanner key 42 of the operation unit 12. Then, the reading unit 13 reads the original and generates the image data as the second parameter.

When the operation to generate the second parameter (i.e., image data) is executed (S418) after the parameter input window is displayed, the second parameters subsequently generated are transmitted to the function server 30 by the HTTP request (S420). From the function server 30 that receives the second parameter, a third parameter request is returned by the HTTP response. The "third parameter request", is, as will be described in detail later, a command to be generated by the function server 30 that receives the second parameter, which is XML data and serves as the command to request the MFP 10 to designate the procedure. Specifically, the function server 30 judges whether the second parameter, which is started to be transmitted in S420, is normally received. Then, the function server 30 returns, together with the result of judgment, the third parameter request that requests for designation of the procedure based on the result of judgment by the third HTTP response.

Next, control receives the third parameter request returned from the function server 30 in response to the second parameter transmitted in S420 (S422).

Then, control induces the user to operate to designate the third parameter by displaying a parameter input window allowing the user to input the third parameter, based on-the third parameter request received in S422 (S424).

If the third parameter request corresponds to the judgment result that the second parameter has not been received normally, based on the XML description of the third parameter request, a parameter input window as shown in Fig. 8C is displayed on the display 52. As shown in Fig. 8C, a message indicating the reception has not completed normally (scan error) at an upper portion of the display area, and items to select whether input of the second parameter is to be executed again (to scan again) (i.e., in Fig. 8C, selectable items "Re-scan", "End") are displayed as selectable items at lower portion of the display area.

If the third parameter request corresponds to the result that the second parameter was not received normally, a parameter input window as shown in Fig. 8D is displayed in accordance with the XML description of the third parameter request.

As shown in Fig. 8D, at an upper portion of the display area, the fee necessary when the service is provided in accordance with the second parameter is displayed. At a lower portion, items to input whether procedure is to be continued ("Continue", "End") are indicated as a selectable items.

After the parameter input window is displayed, the user can designate one of the items as the third parameter.

After display the parameter input window, control judges whether the time is up (S426). Specifically, after the parameter input window was displayed, if the user has not operated to designate an item for a predetermined period (30 seconds, in this example), the control determines that the time is up.

If the control determines that time is up (S426: YES), the control executes the service completion procedure S426 and finishes the copy application job. In S428, the control transmits the service completion command to instruct completion of the copy application service by the HTTP request to the function server 30, and receives the service completion confirmation returned by the HTTP response from the function server 30 that received the service completion command.

If, before the time up (S426: NO), the operation to designate the third parameter is performed (S430), control proceeds to S432. If the thus designated third parameter is one for re-execute input of the second parameter (re-scan of Fig. 8C) (S432: YES), control transmits the third parameter to the function server 30 by HTTP request (S434), and returns to S414. From the function server 30 that receives the third parameter transmitted in S434, control receives the second parameter request by HTTP response. In such a case, the second parameter request is received again in S414.

If the third parameter designated in S430 is a parameter to continue the following steps (i.e., "Continue" is selected in Fig. 8D) (S432: NO; S436: YES), control transmits the third parameter to the function server 30 by HTTP request (S438). The function server 30 that receives the third parameter generates translated data which represents a translation of a text included in the image data indicated by the second data. The data representing the translation is transmitted from the function server 30 as the print data to be printed.

Next, when control receives the print data returned from the function server 30 in accordance with the third parameter transmitted in S438, control causes the recording unit 14 to start forming an image represented by the print data on a sheet-type recording medium (S444).

If no error occurs during printing of images represented by the print data (S446: NO), control transmits notification indicating that printing is finished normally to the function server 30 by the HTTP request (S448). Then control proceeds to S428 to execute the service completion procedure and then finishes the copy application procedure. If, in S448, the normal notification is transmitted, control receives the service completion confirmation from the function server 30 by the HTTP response. In this case, the service completion procedure executes only a step of receiving the service completion confirmation.

If there is an error when the image represented by the print data is being printed (S446: YES), control transmits an error notification indicating that the printing has not been completed normally (i.e., failed) to the function server 30 by the HTTP request (S450). Thereafter, the session ID used in the copy application procedure is stored in association with the current time (S452). Specifically, with a data table stored in the storage unit 16, the session ID is registered in association with the current time to store the information.

When the session ID and the current time are stored, control starts up the service output information requesting procedure (S454), control proceeds to S428 and finishes the service completion procedure to finish the copy application job. It should be noted that the service output information requesting procedure started up in S454 is executed in parallel with other procedures, and will be described in detail later. When control transmits the failure notification in S450, the service completion confirmation is transmitted from the function server 30 by the HTTP response. In this case, the service completion procedure only executes to receive the service completion confirmation.

If the third parameter designated in S430 represents a status where the second parameter will not be re-input (i.e., "End" is selected in Fig. 8C) or the following steps will not be executed (i.e., "End" is selected in fig. 8D) (S436: NO), control proceeds to S428 to executes the service completion procedure and finishes the copy application job.

### Service Output Information Requesting Procedure

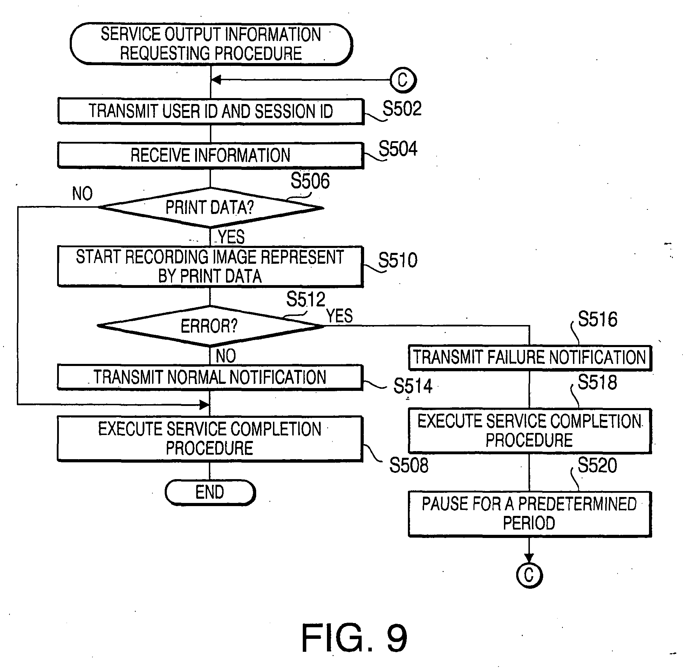

Next, the service output information requesting procedure initiated in S454 of Fig. 7 will be described, referring to Fig. 9.

When the service output information requesting procedure is started, control transmits the user ID input in S402 of Fig. 6 and the session ID stored in S452 to the function server 30 by the HTTP request (S502). The function server 30, when received the IDs, transmits print data by the HTTP response if the print data corresponding to the session ID, while the function server 30 transmits the service completion confirmation by the HTTP response if the print data corresponding to the session ID has not been stored.

If, in S504, the control unit 11 receives the information returned from the function server 30 that received the ID transmitted in S502, control judges whether the received information is the print data (S506). IF the received data is not the print data (S506: NO), control executes the service completion procedure (S508) and finishes the service output information requesting procedure. It should be noted that step S514 is similar to S428 of Fig. 7, and in this case, only a process of receiving the service completion confirmation is executed.

If the received data is the print data (S506: YES), control starts recording the images represented by the print data on the sheet-type recording medium with the recording unit 14 (S510). This step is similar to S444 of Fig. 7.

If no errors occur when the images represented by the print data are being printed (S512: NO), control transmits a normal completion notification to the function server 30 by the HTTP request (S514), and proceeds to S508, where the service completion procedure is executed and the service output information requesting procedure is finished. It should be noted that a process S514 is similar to S448 of Fig. 7, and from the function server 30 that received the normal completion notification, the service completion confirmation is transmitted by the HTTP response. In this case, the service completion procedure only receives the service completion notification.

If there occurs an error when the images represented by the print data are being printed (S510: YES), control transmits the failure notification to the function server 30 by the HTTP request (S516), and, similarly in S508, executes the service completion procedure (S518). Step S516 is similar to S450 of Fig. 7. From the function server 30 that received the failure notification, the service completion confirmation is transmitted by the HTTP response. In this case, the service completion procedure only receives the service completion notification. When the service completion procedure is finished, control pauses for a predetermined period (e.g., 30 seconds, in the illustrative embodiment) (S520), control returns to S502.

### Service Output Information Deleting Procedure

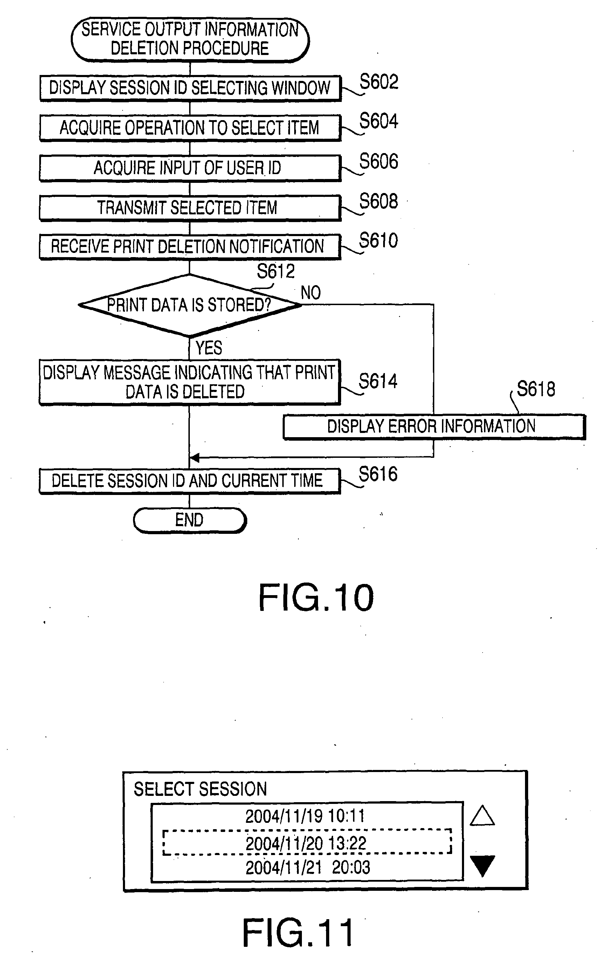

Next, a service output information deleting procedure for deleting the session ID and current time stored in S452 of Fig. 7 will be described with reference to Fig. 10. The service output information deleting procedure is started when a predetermined operation is made with the operation panel 12.

When the service output information deleting procedure is started, control displays a session ID selection window on the display 52 (S602). Fig. 11 shows an example of the session ID selection window. On the session ID selection window, a character string "Session Selection" is displayed at an upper portion of the window, and, based on the data table storing the session ID and associated time information (see S452 of Fig. 7), a plurality of items each indicating the date and time, which are selectable items. When this session ID selection window is displayed, the user can select one of the items by operating the operation unit 12.

After the session ID selection window is displayed and the user's operation to select one of items is done (S604), control displays an ID input window allowing the user to input the user ID on the display 52 and awaits the user's input of the user ID (S606). When the user inputs the user ID, the input user ID and the item selected in S604 (i.e., session ID) are transmitted to the function server 30 by the HTTP request (S608). From the function server 30 that receives the HTTP request, a print deletion notification is transmitted by the HTTP response. The print deletion notification notifies whether the print data corresponding to the selected item (session ID) is stored in the function server 30, and when the print data was stored, the notification also notifies that the print data has been deleted.

After transmitting the ID in S608, control receives the print deletion notification from the function server 30 (S610). If the print deletion notification indicates that the print data corresponding to the session ID was stored (S612: YES), control displays a message saying that the print data corresponding to the item selected in S606 has been deleted at the function server 30 on the display 52 (S614). Then, control deletes the item (i.e., the session ID and the associated current time) from the database (S616) and finishes the output information deletion procedure.

If the print deletion notification indicates that the print data corresponding to the session ID has not been stored (S612: NO), control displays a message saying that the print data corresponding to the item selected in S606 has not been stored at the function server 30 side on the display 52 (S618). Then, control proceeds to S616, where control deletes the corresponding session ID and associated current time, and finishes the service output information deleting procedure.

### Procedures Executed by Function Server

Hereinafter, procedures executed by the control unit 31 of the function server 30 will be described.

### Function Server Procedure

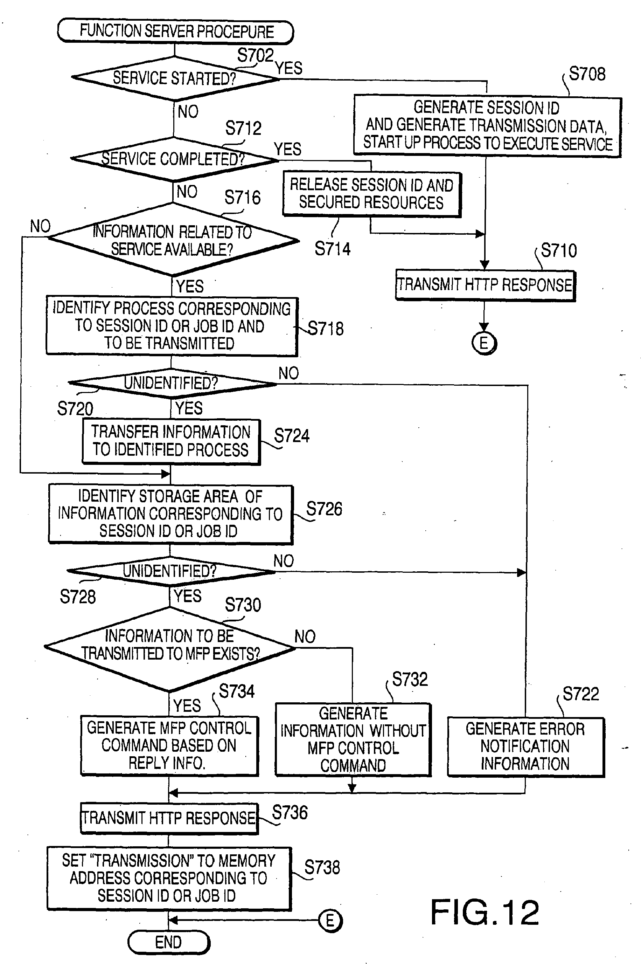

Firstly, a function server process executed by the control unit 31 of the function server 30 will be explained with reference to Fig. 12. The function server process is started when an HTTP request is received by the function server 30.

First, the function server 30 judges whether the received HTTP request is the service startup command (S702). Incidentally, the service startup command is transmitted by the MFP 10 in step S202 of the session process (Fig. 5).

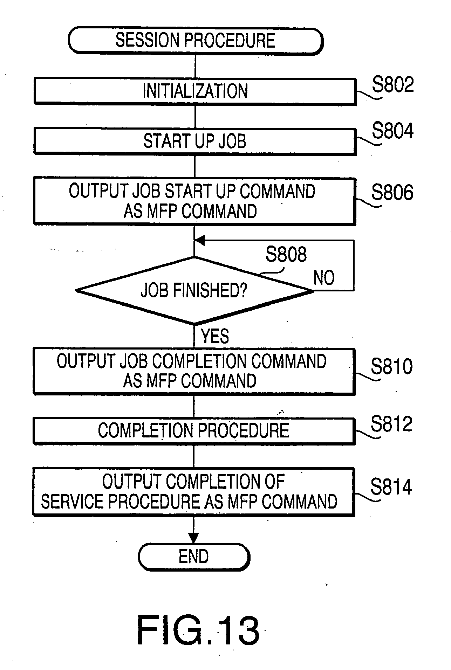

If the received HTTP request is the service startup command (S702: YES), the control unit 31 generates a session ID and transmission data representing the session ID, secures resources for execution of a service, and then initiates a session process (see Fig. 13) (S708). Next, the control unit 11 sends the transmission data back to the MFP 10 as an HTTP response (S710). Then, the function server process terminates. It should be noted that the transmission data (session ID) is received by the MFP 10 in step S204 of the session process (Fig. 5).

If it is judged in step S702 that the HTTP request is not the service startup command (S702: NO), the control unit 31 judges whether the HTTP request is a service end command (S712). It should be noted that the service end command is transmitted from the MFP 10 in step S428 (see Fig. 7) or the service end command is transmitted from the MFP 10 when a user operation for terminating the service (e.g., pushing the cancel key 51) is conducted.

If the HTTP request is a service end command (S712: YES), the control unit 31 releases the session ID and the resources secured in step S708, and generates a session end command (S714). Next, the control unit 31 sends the session end command back to the MFP 10 as an HTTP response (S710). Then, the function server process terminates. It should be noted that the session end command is received by the MFP 10 in step S208, and reception of the session end command is confirmed in step S222 as shown in Fig. 5.

If it is judged in step S712 that the HTTP request is not a service end command (S712: NO), the control unit 31 judges whether the HTTP request contains information about a service (S716). Specifically, the control unit 31 judges whether the HTTP request is issued by the MFP 10 in one of the session process or another job.

If the HTTP request contains information about the service (S716:YES), the control unit 31 identifies the process (session procedure, job) that transmits the HTTP request (S718). If the process can not be identified (S720: NO), control proceeds to step S722 where the function server 30 generates error notification information. Then, control proceeds to step S736.

If the process can be identified (S720: YES), the function server 30 sends the information supplied together with the HTTP request to the identified process (S724). Then, control proceeds to step S726. If there exists no information about the service is contained in the HTTP request (S716: NO), control directly proceeds to step S 172. In step S726, the control unit 31 identifies a memory area storing information corresponding to the session ID or job ID.

Subsequently, the function server 30 judges whether the memory are storing the information corresponding to the session ID or job ID can be identified (S728). If the memory area can not be identified (S728: NO), the function server 30 generates error notification information (S722). Then, control proceeds to step S736.

If the memory area can be identified (S728: YES), the function server 30 judges whether there exists reply information to be sent back to the MFP 10 (S730). If there exists the reply information to be sent back to the MFP 10 (S730: YES), the function server 30 generates an MFP control command based on the return information (S734). Then, control proceeds to step S736. If there exists no reply information to be sent back to the MFP 10 (S730: NO), the function server 30 generates information indicating "no MFP command" (S732). Then, control proceeds to step S736.

In step S736, the control unit 31 information generated in one of steps S722, S732 and S734 to the MFP 10 as an HTTP response. The error notification information generated in step S722 is received by the MFP 10 in step S208, and is used in step S224. The information of "no command" is received by the MFP 10 in step S208, and reception of the "no command" is confirmed in step S220. The MFP control command generated in step S734 varies depending on the job type, and is received by the MFP 10 in respective jobs.

In step S738, the control unit 31 assigns information "transmission completion" to an memory address corresponding to the session ID or job ID. Then, the function server process terminates.

### Session Procedure

Hereafter, a session process executed by the control unit 31 of the function server 30 will be explained with reference to Fig. 13. The session process is executed concurrently with the function server process.

First, the control unit executes an initialization process (S802). Next, the control unit 31 initiates a job corresponding to the service designated by the service initiation command (S804). It should be noted that the service initiation command is issued by the MFP 10 in step S202, and reception of the service initiation command is confirmed by the function server 30 in step S702 (Fig. 12) of the function server process.

Next, in step S806, the control unit 31 issues an MFP command corresponding to the initiated job. Specifically, in step S806, the control unit 31 writes a job initiation command in a memory area for storing reply information, together with a job ID and a destination address. Based on the reply information, the MFP command is generated in step S734 (Fig. 12), and the reply information is sent to the MFP 10 as a job initiation command. The job initiation command is received by the MFP 10 in step S208 (see Fig. 5), and the job designated by the job initiation command is initiated by the MFP in step S213.

Next, the control unit 31 waits until the job initiated in step S804 terminates (S808: NO). If the job terminates (S808: YES), the control unit 31 sends a job end command for the initiated job to the MFP 10 as an MFP command (S810). Specifically, the control unit 31 writes the job end command and the job ID in the memory area for the reply information. Based on the reply information, the MFP command is generated in step S734 (Fig. 12), and the reply information is sent to the MFP 10 as a job end command. The job end command is received by the MFP 10 in step S208 (see Fig. 5), and the job designated by the job end command is terminated in the MFP in step S218.

Next, in step S812, the control unit 31 executes an end process including an operation for releasing the resources for the job. Then, the session process of the function server 30 terminates. Specifically, in step S812, the control unit 31 writes the session end command in the memory area for storing the reply information. Based on the reply information, the MFP command is generated in step S734 (Fig. 12), and the reply information is sent to the MFP 10 in step S736. The session end command is received by the MFP 10 in step S208 (see Fig. 5), and the reception of the session end command is confirmed by the MFP 10 in step S222.

### Copy Application Job

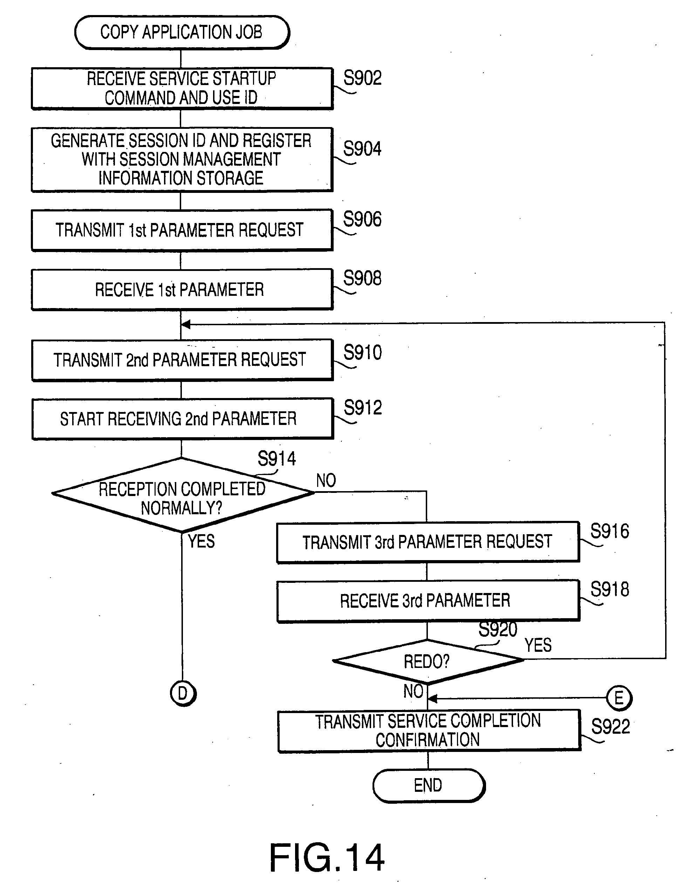

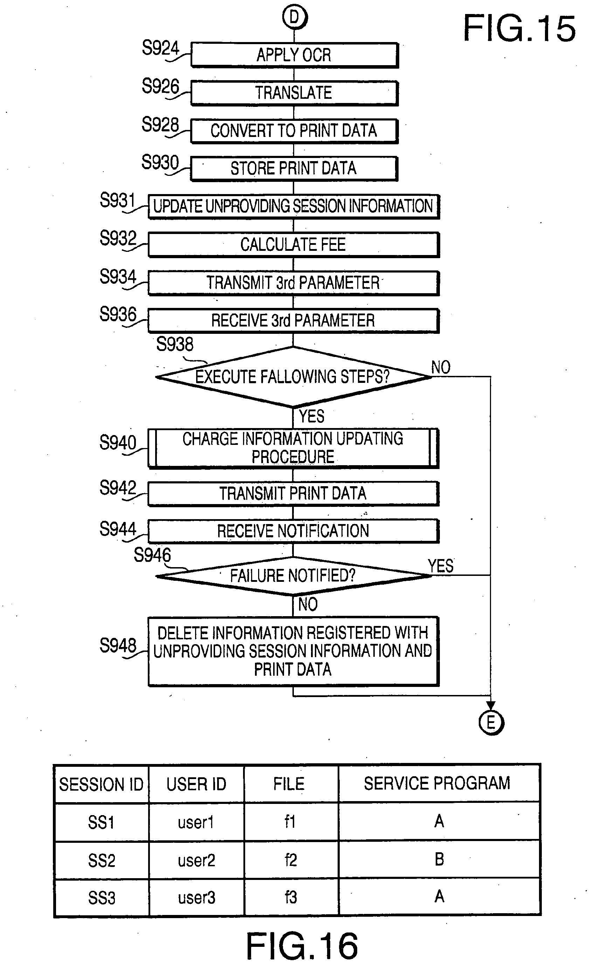

Next, the copy application started in S804 of Fig. 13 will be described with reference to Figs. 14 and 15.

When the copy application job is started, control receives the user ID and service startup command from the MFP 10 (S902). Then, control generates a session ID to mange a session with the MFP 10 that transmitted the user ID and the service startup command, and stores the thus generated session ID in the session management storage unit 140 (S904). According to the first embodiment, the session management information storage unit 140 stores session management information (see Fig. 16), which is database with which the session ID is registered in association with the user ID and the like. That is, in S904, the session ID and the user ID received in S902 are related to each other and are registered with the database, thereby session ID is stored.

Next, control a first parameter request to the MFP 10 by the HTTP response (S906). The first parameter request is one the MFP 10 receives in S406 of Fig. 6. The first parameter request is an XML data representing a request for the first parameter (in this embodiment, a translation method). The MFP 10, when receives the first parameter request, transmits the first parameter in S412 of Fig. 6-by the HTTP request.

When control receives the first parameter from the MFP 10 that received the first parameter request transmitted in S906 (S908), control returns the second parameter request to the MFP 10 by the HTTP request (S910). The second parameter request transmitted here is the HTTP request the MFP 10 receives in S414 of Fig. 6, and is an XML data representing a request for the second parameter (e.g., image data obtained by scanning an original) to the MFP 10. The MFP 10 that received this second parameter request transmits the second parameter in S420 of Fig. 6 by the HTTP request.

Next, after control starts receiving the second parameter from the MFP 10 that received the second parameter transmitted in S910 (S912), if the reception of the second parameter does not complete normally (S914: NO), control notifies of the error status and transmits a third parameter request for instructing the MFP 10 to designate whether the second parameter is to be regenerated to the MFP 10 (S916). Specifically, as the third parameter request, a message indicating that the second parameter has not been generated normally in the MFP 10 or the second parameter has not been received normally (i.e., failure of scanning) is notified, and an XML data instructing to select whether the second parameter is to be regenerated (i.e., rescanning) or not is transmitted to the MFP 10 by the HTTP response. The third parameter request is to be received by the MFP 10 in S422 of Fig. 6, and by the MFP 10 received the third parameter request transmits the third parameter indicating whether the second parameter is regenerated (i.e., rescanning is performed) or not by the HTTP request.

If the control receives the third parameter from the MFP 10 that received the third parameter request transmitted in S916 (S918), if the third parameter indicates that the second parameter is to be regenerated (i.e., when "rescanning" is selected in Fig. 8C) (S920: YES), control proceeds to S910 and returns the second parameter request to the MFP 10.

If the third parameter does not indicate regeneration of the second parameter (i.e., when "End" is selected in Fig. 8C) (S920: NO), control transmits the service completion confirmation notifying of the completion of the copy application service to the MFP 10 by the HTTP response (S922), and finishes the copy application job. The service completion confirmation is received by the MFP 10 in S428 of Fig. 7.

If the second parameter, which is started to be received in S910, has been received normally (S914: YES), control applies an OCR (Optical Character Recognition) to the image data represented by the second data as shown in Fig. 15. By applying the OCR to the image data represented by the second parameter, a text portion is extracted and converted into text data.

Next, in S924, control converts the text data, which has been created by the OCR, into text data containing translated text which has been translated in accordance with the translation method represented by the first parameter (S926).

Then, control further converts the translated text data into print data in order to print the text as an image (S928), and stores the thus created print data (S930). IT should be noted that, the print data converted in S928 is stored in the service output storage 150 of the storage unit 33.

Next, control updates unprovided session information (S931). According to the first embodiment, the session management information storage unit 140 stores unprovided session information that is a data table in which a user ID, a session ID and a path name of print data are registered in relation with each user to whom the print data has not yet been provided normally. Therefore, in S931, by registering the user ID, session ID registered with the session management information in S904 and the path name of the print data stored in S930 are registered in the data table in a related manner, thereby updating the unprovided session information.

Next, in S926, a fee to be charge to the user when the text data is translated is calculated (S932). Here, the number of characters (or words) constituting the text data or the number of pages are multiplied by unit fee for translation to obtain the fee to be charged to the user.

Next, control creates the third parameter request in which the fee calculated in S932 is incorporated as a message, and transmits the third parameter to the by the HTTP response (S934). Here, as the third parameter request, a message indicating the fee calculated in S932 is notified to the MFP 10, and further XML data instructing whether the following procedure is to be executed (continued) is transmitted to the MFP 10 by the HTTP response. The third parameter request is received by the MFP 10 in S422 of Fig. 6. From the MFP 10 that received the third parameter request, the third parameter indicative of whether the following steps are to be executed (continued) is returned by the HTTP request.

When the third parameter is received (S936) from the MFP 10 that received the third parameter request transmitted in S934, if the third parameter indicates not to execute the following steps (i.e., "End" is selected in Fig. 8D) (S938: NO), control proceeds to S922, where control transmit the service completion confirmation and finishes the copy application job.

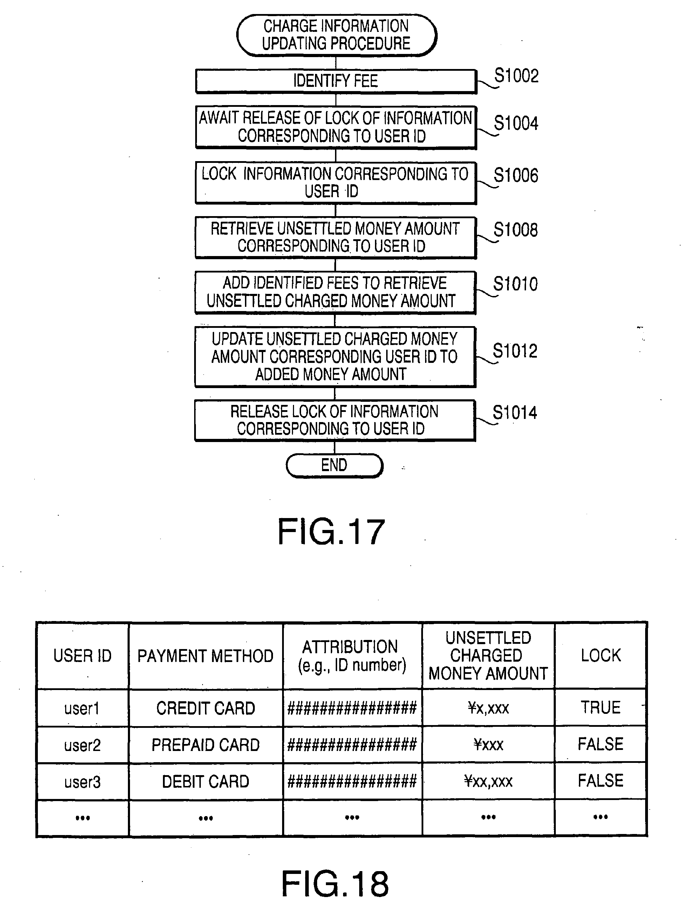

IF the third parameter indicates to execute the following steps (i.e., "Continue (charge)"in Fig. 8D is selected) (S938: YES), control executes a charge information updating procedure (S940). The charge information updating procedure is for charging the user who receives the translation copy service. The detailed description of a charge information updating procedure (Fig. 17) will be given later.

Next, the print data stored in S930 is transmitted to the MFP 10 by the HTTP response (S942). The print data is to be received in S440 (Fig. 7) by the MFP 10, and from the MFP 10 that received the print data, if the image represented by the print data can be printed normally, normal status information is transmitted by the HTTP request, while the print is not completed normally, the failure notification is returned by the HTTP request.

When the notification is received from the MFP 10 that received the print data transmitted in S942 (S944), if the notification is the failure notification (S946: YES), control proceeds to S922, and transmits the service completion confirmation and finishes the copy application job. If the received notification notifies of the normal condition (S946: NO), control proceeds to S931 and delete information (e.g., user ID, session ID, pathname of print data) registered with the unprovided session information and the print data stored in S930 (S948). Thereafter, control proceeds to S922, transmits the service completion confirmation and finishes the copy application job.

### Charge Information Updating Procedure

Hereafter, the accounting information update process to be executed in S940 of Fig. 15 will be explained with reference to Fig. 17.

First, the control unit 31 determines a fee for the service (S1002). Specifically, the control unit 31 determines the fee according to the first parameter received in S908 (Fig. 14).

Next, the control unit 31 waits until a licked state of the information corresponding to the user ID obtained in step s902 is released (S1004). Fig. 18 shows an example of a data structure of accounting information stored in the accounting information memory area 130. As shown in Fig. 18, in the accounting information, each user ID is associated with some types of information including "the manner of settlement", "information accompanying the settlement", "the amount of unsettled money", and information indicating whether access to the accounting information is restricted. "TRUE" of item "Lock" in the accounting information indicates that the access to the accounting information corresponding to the state "TRUE" is restricted. "FALSE" of item "Lock" in the accounting information indicates that the access to the accounting information corresponding to the state "FALSE" is released.

If the state where the access to the accounting information is released is reached, control proceeds to step S1006 where the control unit 31 set the accounting information corresponding to the user ID obtained in S902 to the locked state. That is, the control unit 31 assigned "TRUE" to the stateofthe item "Lock" corresponding to the user 1D obtained in S902.

Next, the control unit 31 reads out the amount of unsettled money corresponding to the user ID obtained in S902, from the accounting information (S1008). Then, in step S1010, the control unit 31 adds the fee determined in step S1002 to the amount of unsettled money obtained in step S1008. Next, in step S1012, the control unit 31 replaces the amount of unsettled money corresponding to the user ID obtained in step S902 with the amount of money figured out in step in S1010.

Then, the control unit 31 changes the locked state of the accounting information corresponding to the user ID to an unlocked state (S 1014). That is, the control unit 31 assigns "FALSE" to the state of the item "Lock" corresponding to the user ID so as to allow access to the accounting information corresponding to the user ID.

The unsettled money registered in the accounting information may be used at regular time intervals to transfer money from the user's account to the account of a service provider offering the ticket issue service. After payment (e.g., transfer or withdrawal) is completed, the control unit 31 updates the accounting information to change the amount of unsettled money to zero.

### Service Output Information Transmitting Procedure

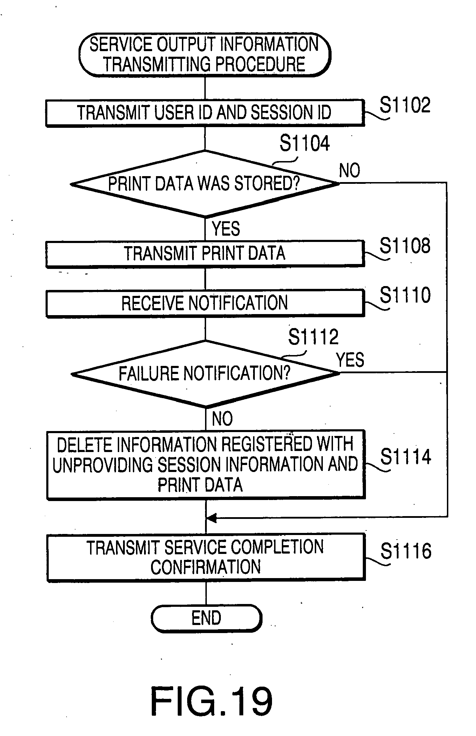

Next, a service output information transmitting procedure which is started when the user ID and session ID are received will be described with reference to Fig. 19.

In this service output information transmitting procedure, after the user ID and session ID are received (S 1102), control judges whether the print data corresponding to the user ID and the session ID is stored (S 1104). Specifically, control determines that the print data is not stored if the path name corresponding to the user ID and session ID received in S 1102 is registered with the unprovided session information, the control determines that the corresponding print data is stored.

If it is determined that the corresponding print data is not stored (S 1104: NO), control transmits the service completion confirmation (S 1106) and finishes the service output information transmitting procedure.

If control determines that the corresponding print data is stored (S 1104: YES), control transmits the corresponding print data to the MFP 10 by the HTTP response (S 1108). The print data is to be received by the MFP 10 in S504 of Fig. 9. If the MFP 10 normally receives the print data, the normal reception notification is transmitted from the MFP 10 by the HTTP request. If the reception is not normally completed, the failure notification is transmitted from the MFP 10 by the HTTP request.

When control receives, in S1110, the notification from the MFP 10 that received the print data transmitted in S 1108, if the notification is the failure notification (S1112: YES), control proceeds to S 1106 and transmits the service completion confirmation and finishes the user application job. On the other hand, if the received notification is the normal reception notification (S1112: NO), control deletes the information (e.g., user ID, session ID, the path name of the print data) which is determined to be registered in S 1104 and the print data stored at a location indicated by the path name of the print data (S1114). Then, control proceeds to S1106, transmits the service completion confirmation and finishes the user application job.

### Advantage of Aspects of First Embodiment

In the service providing system configured as above, if the MFP 10 starts printing in accordance with the print data received from the function server (S444 of Fig. 7), and then determines that printing cannot be performed appropriately due to an error (S446 of Fig. 7), the MFP 10 starts up the service output information requesting procedure (S454) and request the function server 30 for the print data again (S502 of Fig. 9).

Then, in response to the above request, the function server 30 transmits the print data to the MFP 10 only when the print data corresponding to the user ID and session ID, which are transmitted in association with the request, is started (S 1104 of Fig. 19). That is, only when the MFP 10 that issued the request is the MFP 10 that previously received the print data, the corresponding print data is transmitted to the MFP 10 (S 1108 of Fig. 19).

Therefore, if there occurs a situation where the MFP 10 cannot print the print data normally (e.g., S446 of Fig. 7; S512 of Fig. 9) due to certain trouble, although the print data has already been charged on the function server 30 side (S940 of Fig. 15), no charge will be required for a further request for the print data, and the print data can be transmitted to the MFP 10 (S 1198 of Fig. 19). Therefore, at last, the contents, which are a printout of the images represented by the print data, can be provided to the user of the MFP 10 at an appropriate cost and without surcharge.

Among the services that can be provided by the function server 30 to the MFP 10, "Translation Copy Service" is a service that creates translated data representing a translation of a text extracted from image data received from the MFP 10 and provides the print data representing the translated text to the MFP 10.

The function server 30 stores the print data that is generated when it firstly received the request from the MFP 100 (S930 of Fig. 15), and when the request is received from the MFP 10 again, the stored print data is retrieved and transmitted (S1108 of Fig. 19). Therefore, once the second parameter is requested and transmitted therebetween, it is not necessary to request/transmit the second parameter, and the print data generated based on the second parameter can be transmitted to the MFP 10.

According to the above configuration, even if the print data cannot be printed normally at the MFP 10, the second parameter will not be transmitted between the function server 30 and the MFP 10. Therefore, traffic of the network will not be increased unnecessarily. Further, a time interval for transmitting the second parameter can be omitted, and thus, the time for providing contents to the user by printing the print data can be shortened.

According to the above configuration, the charging procedure is executed on the function server 30 after the second parameter transmitted from the MFP 10 has been received (S940 of Fig. 15). Therefore, if the second parameter has not been received normally due to, for example, a communication error, the fee will not be charged to the user.

The print data is transmitted from the function server 30 to the MFP 10 after the second parameter has been transmitted from the MFP 10 to the function server 30 (S942 of Fig. 15). Therefore, inappropriate action can be prevented. That is, if the print data is transmitted from the function server 30 to the MFP 10 before reception of the second parameter has been completed, when part of the print data is normally printed, the transmission of the second data is stopped and, since the transmission of the second data has not been completed on the function server 30 side, the fee will not be charged. Thus, an inappropriate action may occur such that the above-described situation is intentionally caused. However, as described in the illustrative embodiment, if transmission of the print data from the function serer 30 to the MFP 10 is executed after the reception of the second parameter from the MFP 10 has been completed, even if the transmission of the second parameter is intentionally stopped after part of the print data is normally printed, the charging procedure has already been executed on the function server 30 (S940 of Fig. 15), Therefore, according to the configuration of the first embodiment, the above described inappropriate action will be prevented.

The print data generated by the function server 30 (S924-S928 of Fig. 15) is transmitted to the MFP 10 in response to a request issued by the MFP 10 (S942 of Fig. 15; S 1108 of Fig. 19). Therefore, on the MFP 10 side, only by transmitting a request to the function server 30 (S438 of Fig. 7; S502 of Fig. 9), the print data can be obtained without executing any particular operation.

According to the illustrative embodiment, the MFP 10 prints images represented by the print data after the MFP 10 is notified that the fee to be charged if the print data is printed (S424 of Fig. 6), and further, the user selects to proceed ("Continue (charged)" of Fig. 8D is selected) (S444 of Fig. 7). Only when the MFP 10 prints out the images represented by the print data, the fee previously notified is charged (S938, S940 of Fig. 15). Therefore, the user of the MFP 10 can reconsider whether the images represented by the print data should be printed with reference to the notified fees.

The illustrative first embodiment can be modified in various ways without departing from aspects of the invention.

For example, as a client device, MFP 10 is employed in the above-described illustrative first embodiment. It should be noted that the client device need not be the MFP 10, and any other device having a function of reading an original and creating image data representing the original image, transmitting the thus created image data to the function server 30, and printing the print data transmitted from the function server can serve as the client device. Such a device may be a copier, printer, a facsimile machine, etc.

In the above-described illustrative first embodiment, the function server 30 stores the print data which is generated in accordance with the request of the MFP 10 (S930 of Fig. 15), and the thus stored print data is transmitted to the MFP 10 if the MFP 10 issued a request for retransmission of the print data (S1108 of Fig. 19). Such a configuration can be modified such that the function server 30 does not store the previously generated print data, and upon every request transmitted from the MFP 10 to the function server 30, the MFP 10 reads the original and transmits the image data (i.e., the second parameter) to the function server 30, and the function server 30 generates the print data based on the transmitted image data.

In the illustrative first embodiment, the print data is directly transmitted from the function server 30 to the MFP 10. It should be noted that a method of providing the print data need not be limited to the method employed in the illustrative embodiment. For example, the print data generated by the function server 30 may be stored in a storage area which the MFP 10 can access. Then, by notifying the accessible condition to the MFP 10, the print data is provided to the MFP 10. In this case, the MFP 10 may be configured such that it accesses the print data when the notification indicating the accessible condition is received from the function server 30, and print images in accordance with the accessed print data.

With such a configuration, the MFP 10 can indirectly receive the print data from the function server 30 simply by accessing the print data stored in an accessible location upon receipt of the notification from the function server 30.

According to the illustrative first embodiment, before the print data is transmitted to the MFP 10, the fee to be charged for the print data is notified to the user (S424 of Fig. 6), and when the user selects to proceed ("Continue (charged)" in Fig. 8D is selected), the print data is transmitted (S444 of Fig. 7). This may be modified such that the function server 30 transmits the print data, and then notifies of the fee to be charged if the print data is printed. If, on the MFP 10 side, it is determined to proceed with the print data, it is notified to the function server 30, and the images represented by the print data are printed. When the function server 30 receives the notification that the MFP 10 prints out the print data, the charging operation is executed.

### Second Illustrative Embodiment

Hereinafter, a printing system according to a second illustrative embodiment will be described with reference to the drawings.

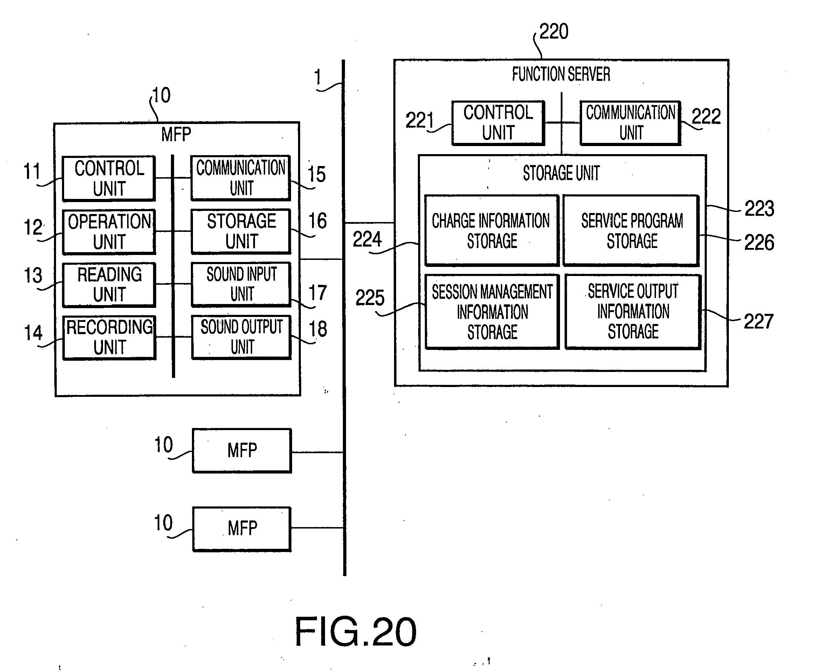

Fig. 20 is a block diagram showing a configuration of a printing system according to a second embodiment.

The printing system shown in Fig. 20 includes a plurality of MFPs (Multi-Function Peripherals) 10, 10, ... and a function server. The MFPs 10 and the function server 220 are connected through a network 1 so that data communication can be performed therebetween. According to the first embodiment, the network 1 is the Internet.

Each MFP 10 has functions of a telephone (voice communication), a scanner, a printer, a copier and a facsimile machine. As show in Fig. 20, the MFP 10 includes a control unit 11, an operation unit 12, a reading unit 13, a recording unit 14, a communication unit 15, a sound input unit 17 and a sound output unit 18.

The control unit 11 is configured to have a well-known microcomputer including a CPU (Central Processing Unit), a ROM (Read Only Memory), a RAM (Random Access Memory) and the like. The control unit 11 controls each unit of the MFP 10.

The operation unit 12 is provided with an operation panel 12a (see Fig. 2) arranged on an outer surface of the MFP 10. The operation unit 12 accepts user's input, and displays various pieces of information to the user.

The reading unit 13 operates, in accordance with the command from the control unit 11, to read image on an original set at a predetermined original scanning position, and reads (scans) the image formed on the original using an image sensor such as a CCD (Charge Coupled Device) or CIS (Contac Image Sensor) to generate image data.

The recording unit (printer) 14 operates, in accordance with the command from the control unit 11, to feed recording sheets accommodated in a sheet cassette one by one, form an image represented by the image data (print data) on the recording sheet in accordance with an image formation method such as a laser transfer method (electrophotographic imaging method), inkjet method and the like), and then, discharge the sheet to a discharged sheet tray. It should be noted that, the recording unit 14 is capable of printing images based on image data such as one generated by the reading unit 13, facsimile data received with the facsimile function, image data received form a personal computer (not shown) or other external devices such as the function server 220.

The communication unit 14 operates to transmit/receive data via the network 1.

The storage unit 16 stores various pieces of data in a non-volatile RAM (not shown).

The sound input unit 17 operates to acquire sound (voice) through a handset (not shown) provided to the MFP 10, and generate sound data (e.g., PCM data) representing the input sound.

The sound output unit 18 outputs sound represented by sound data from a speaker provided to the handset and/or a speaker (not shown) provided to the MFP 10.

Next, the function server 220 will be described in detail. The function server 220 is for receiving a request for a service from the MFP 10, and provides, in response to the request, the requested service to the MFP 10 that issued the request. The function server includes a control unit 221, a communication unit 222 and a storage unit 223.

The control unit 221 is configured to have a well-known microcomputer including a CPU, a ROM and a RAM. The control unit 221 controls the entire operation of the function server 20 (i.e., various components thereof).

The communication unit 222 operates to transmit/receive data through the network 1.

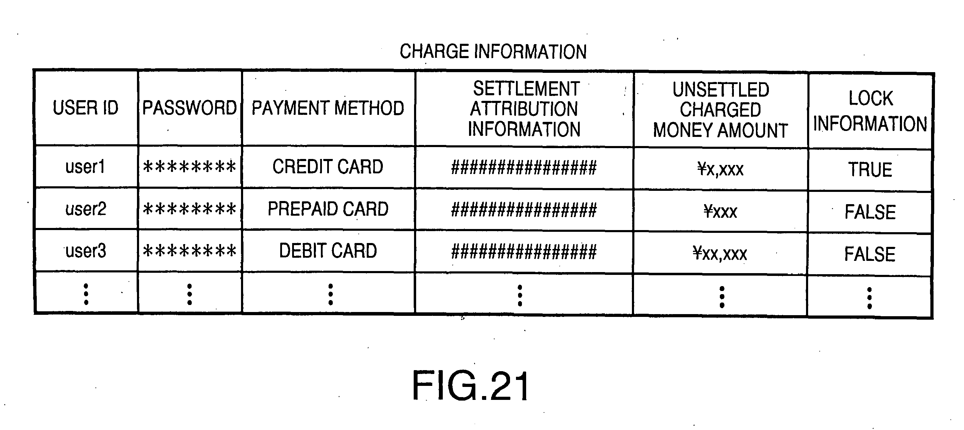

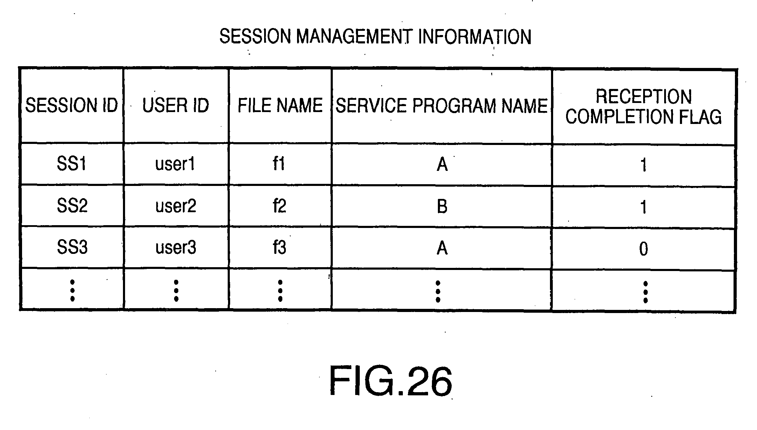

The storage unit 223 operates to store various pieces of data on a hard disk (not shown). Specifically, the storage unit 223 is provided with a charge information storage unit 224 configured to store charge information described later (see Fig. 21), a session management information storage unit 225 configured to store session management information described later (see Fig. 26), a service program storage unit 226 configured to store service programs described later, and a service output information storage unit 227 configured to store output data described later.

The service programs stored in the service program storage 225 are executed to provide various services to the MFP 10. That is, the service program storage 226 stores a plurality of service programs corresponding to a plurality of services which can be provided to the MFP 10. When each of the service programs is executed, a corresponding service is provided to the MFP 10. Specifically, for example, the services include a translation copy service which is a service for translating a text read from an original with the reading unit 13 of the MFP 10 into a predetermined language (e.g., English), generates print data containing the translated text, and controls the recording unit 14 of the MFP 10 to print the thus generated print data, a news providing service which is a service for obtaining the latest news data from a predetermined data base, generating print data representing the thus obtained news data, and let the recording unit 14 of the MFP 10 print out the print data, and a reading aloud service that is a service for converting a text read from an original with the reading unit 13 of the MFP 10, converting the text to sound (voice) data, and controls the sound output unit 18 of the MFP 10 to output the sound data.

Next, operations performed by the printing system according the embodiment will be described in detail.

When a user depresses the service key 44 of the operation panel 12a, the MFP 10 displays a service selection window (not shown) allowing the user to select a desired service from a plurality of services the function server 220 can provided (i.e., available to the MFP 10) on the display 52 of the operation panel 12a. It should be noted that the services the function server 220 may provide may be stored in the MFP 10 in advance. Alternatively, data representing the services that can be provided by the function server 220 may be transmitted from an external device (e.g:, the function server 220 or any other server) to the MFP 10, then even in an environment where the available services may change), the user can select a desired service from the latest list of the services.

When the user selects one of the services from the plurality of available services displayed on the display 52 of the MFP 10, the MFP 10 displays an ID input window (not shown) allowing the user to input the user ID and a password on the display 52 of the operation panel 12a.

The user ID and the password are identification information intrinsic to each user, which is necessary to receive the services provided by the function server 220. The identification information is assigned to each user when the user performs a predetermined registration procedure with respect to a service provider using the function server 220. In the printing system according to the embodiment, the function server 220 is configured to execute a charging procedure for charging each user who requests the services, and the user ID and password are used by the function server 220 to identify the user who has requested each service. It should be noted that the user registration service may be executed through the operation panel 12a of the MFP 10, personal computers or the like.

In the user registration procedure, the user is required to register a method of payment (credit card, prepaid card, debit card or the like) and/or corresponding information (i.e., the card number, the password of the card, and the like, which are necessary of payment). Such information is stored in the charge information storage 224 of the function server 220 as the charge information. Specifically, as shown in Fig. 21, in the charge information storage 224, the user ID, password, the payment method, the information corresponding to the payment method, unsettled charging amount, and rock information are stored. The unsettled amount represents the accumulated amount of charges which has not yet settled by the user or the direct debit has not yet been performed. The rock information represents whether the charge information is rewritable. That is, when the rock information represents "FALSE", the charge information is rewritable, while the charge information cannot be rewritten when the rock information represents "TRUE". When the charge information is being rewritten, the rock information is set to "TRUE". That is, the rock information prevents a plurality of rewriting operations of the charge information from being executed simultaneously.

When the user inputs the user ID and the password through the ID input window displayed on the display 52, the MFP 10 request the function server 220 for the service selected by the user through the service selection window.

When the service request is received from the MFP 10, the function server 220 executes the service program corresponding to the requested service, and transmits data (such as print data, sound data etc., which will be occasionally referred to as "output data" hereinafter) corresponding to the service contents to the MFP 10 which has issued the service request. When the MFP 10 starts executing a process to output the "output data" corresponding to the requested service (e.g., printing out an image corresponding to the data, output sound represented by the data, etc.), the function server 220 executes the charging procedure for the service. That is, the function server 220 updates the unsettled charging amount of the charge information stored in the charge information storing unit 224 corresponding to the requested service.

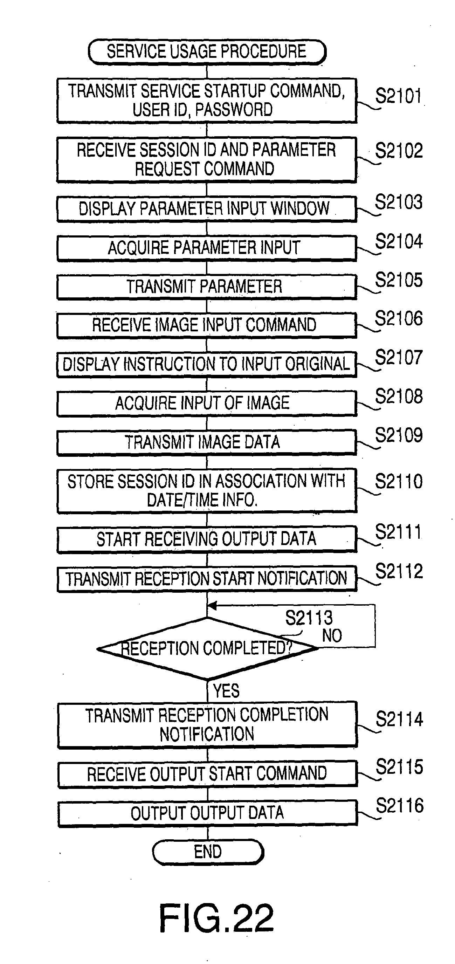

In the printing system according to the embodiment, the MFP 10 is capable of requesting the function server 220 for re-transmission of the output data. That is, the function server 220 is configured such that the output data to be transmitted to the MFP 10 is stored in the service output information storage unit 227 of the storage unit 223, and that the output data is transmitted to the MFP 10 upon request for retransmission. On the other hand, the MFP 10 displays a retransmission data selection window (see Fig. 4) allowing the user to select the output data to be retransmitted on the display 52 of the operation unit 12a, when the user performs a predetermined retransmission operation on the operation panel 12a. Specifically, every time when a service request is transmitted to the function server 220, the MFP 10 stores information for identifying the service request (i.e., date/time information indicative of date and time when the session ID and the service are requested) in the storage unit 16 (which is shown as S 110 in Fig. 22), and in the retransmission data selection window, the data/time information stored in the storage unit 16 is displayed as a list. When the user selects on of the pieces of the data/time information displayed in the retransmission data selection window, the MFP 10 displays the ID input window similarly to a case when the service is firstly requested on the display 52 of the operation panel 12a. When the user inputs the user ID and the password, the MFP 10 executes a process for requesting the function server for retransmission of the output data corresponding to the date and time selected by the user on the retransmission data selection window.

In the printing system, the output data stored in the service output data information storage unit 227 of the function server 220 is deleted as a predetermined input operation at the MFP 10. When the user operates through the operation panel 12a a predetermined deleting operation, the MFP 10 displays a delete data selection window (not shown) on the display 52 of the operation panel 12a for allowing the user to select the output data to be deleted (i.e., of which the deletion request is transmitted to the function server 220). Specifically, similar to the retransmission data selection window shown in Fig. 4, as data for identifying the output data to be transmitted, the date/time information stored in the storage unit 16 is displayed as a list. When the user selects date/time information in the delete data selection window (a window similar to one shown in Fig. 4) displayed on the display 52, the MFP 10 displays the ID input window similarly to a case where the service is requested on the display 52 of the operation unit 12a. When the user inputs the user ID and the password in the ID input window, the MFP 10 executes a process of transmitting a request for deletion of the output data corresponding to the user-selected date and time in the deletion data selecting window to the functions server 220.

Next, procedures respectively executed by the control unit 11 of the MFP 10 and the control unit 221 of the function server 220 will be described in detail.

Fig. 22 shows a flowchart illustrating a service usage procedure executed by the control unit 11 of the MFP 10. The service usage procedure is started when a service is selected through the service selection window displayed on the display 52 of the operation panel 12a and the user ID and the password are input through the ID input window. It should be noted that concrete contents of the service usage process may be different depending on the requested service. For example, depending on a service, an image of the original should be read with the reading unit 13, which may not be necessary for another service. In the following description, as an example, it is assumed that the translation copy service is selected.

When the service usage procedure is started, in S2101, a service start-up command corresponding to the service selected through the service selection window (i.e., the translation copy service in this example) that requests the function server 220 for the selected service, and the user ID and password of the user who made the request are transmitted to the function server 220.

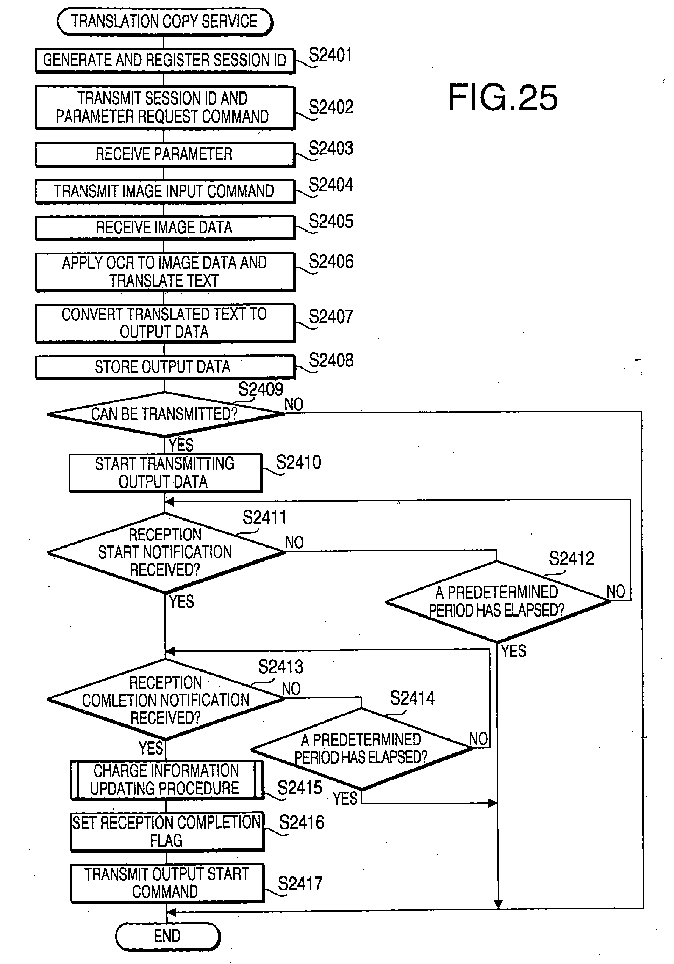

In S2102, the control receives the session ID and parameter request command which are transmitted from the function server 220 in response to the service start-up command transmitted in S2101. Here, the session ID represents identification information intrinsic to each service request, which are used for distinguishing communications related to a plurality of service requests on the function server 220. That is, in the following steps (e.g., S2105, S2109, S2112 and S2114), the MFP 10 transmits data to be transmitted to the function server 220 to the function server 220 together with the session ID. The function server 220 is capable of identifying the request data to which the data corresponds based on the session ID. It should be noted that, in this example, the session ID is created in S2401 of the translation copy service procedure (Fig. 25) executed by the control unit 221 of the function server 220, and transmitted to the MFP 10 that issued the service start-up command together with the parameter request command in S2402.

In S2103, the control displays the parameter input window allowing the user to set parameters necessary of the service (i.e., the translation copy service, in this embodiment) on the display 52 based on the parameter request command received in S2102. Specifically, the parameter request command includes XML (extensible Markup Language) data representing the parameter input window shown in Fig. 8A. The MFP 10 displays the parameter input window on the display 52 in accordance with the XML data. In this example, as destination languages of the translation copy service, a plurality of selectable parameters (e.g., English → Japanese, Japanese → English) are displayed. By operating the up and down keys 46 ad 47 to move a cursor, which is indicated as a rectangle indicated by broken line in up and down directions in Fig. 8A to highlight a desired parameter. Then, by depressing the OK key, the highlighted parameter can be selected (input). Of course, for another service, different parameters necessary for the service are to be set in a similar manner (e.g., for a news providing service, the parameters being category and source of the news). For a service which does not require the parameter setting, the parameter request command is not received in S2102, and thus steps S2103-S2105 are skipped for such a service.

In S2104, the control pauses until the user selects a parameter in the parameter input window displayed on display 52. When the user selects the parameter, the control proceeds to S2105.

In S2105, the control executes a process to transmit the parameter (e.g., "English → Japanese" or "Japanese → English") to the function server 220.

Next, in S2106, the control receives the image input command that is transmitted form the function server 220 in response to the parameter transmission executed in S2104. The image input command is for requesting the MFP 10 to transmit image data (in this example, the image data of the original of which the text is translated) necessary for providing the service. It should be noted that he image input command is transmitted to the MFP 10 in S2404 of the translation copy service (Fig. 25) which is executed by the control unit 221 of the function server 220.

In S2107, the control displays a message that asks the user to set the original and have the reading unit 13 read the original bearing the test to be translated (e.g., "[p]lease set the original and touch the OK key") on the display 52 of the operation panel 12a.

In S2108, the control pauses until the user operates to read the original. When the reading operation is executed, the control proceeds to S2109.

In S2109, the control transmits the image data, which is generated by reading the original (i.e., the image data generated by the reading unit 13) is transmitted to the function server 220. If a service which does not require reading of the original (e.g., the news providing service), steps S2106 through S2109 are skipped.

In S2110, the control stores the session ID received in S2102 in the storage unit 16 in association with the current date and time. That is, the date/time information when the service is required and the session ID are stored in the storage unit 16 as service request history information. It should be noted that the data stored in S2110 is referred to when retransmission of the output data is required, or the output data is requested to be deleted.

In S2111, control start receiving output data (in this embodiment, the print data containing translated text) that is transmitted from the function server 220. The received output data is stored in the storage unit 16. It should be noted that it is inhibited to output the received output data; until the output start command is received from the function sever 220.

In S2112, control transmits the reception start notification indicating the reception of the output data is started to the function server 220.

In S2113, control judges whether the reception of the output data has been completed (i.e., whether all the output data has been stored in the storage unit 16), and if it is completed, control proceeds to S2114.

In S2114, control transmits a reception completion notification that notifies that the output data has been received to the function server 220. Then, the function server 220 starts executing the charging procedure (charge information updating procedure).

In S2115, control receives an output start command transmitted from the function server 220 in response to the reception completion notification transmitted in S2114. It should be noted that the output start command is transmitted to the MFP 10 that issued the reception completion notification in S2417 of the translation copy service (Fig. 25) executed by the control unit 221 of the function server 220.

Next, in S2116, control outputs the output data (prints images represented by the print data), which is the data received from the function server 220 and stored in the storage unit 16. Then, control finishes the service usage procedure.

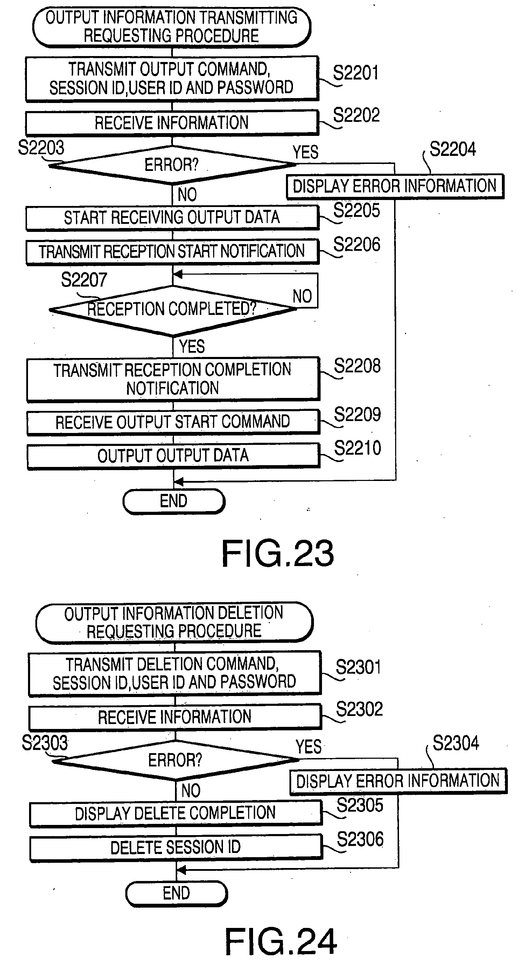

Next, an output information transmission requesting procedure executed by the control unit 11 of the MFP 10 will be described with reference to Fig. 23. It should be noted that the output information transmission requesting procedure is started when the user selects the date/time information through the retransmission data selection window (Fig. 4) displayed on the display 52 of the operation panel 12a, and further the user inputs the user ID and password through the ID input window.

When the output information transmission requesting procedure is started, in S2201, the control transmits an output command requesting the function server 220 to transmit the output data, the session ID corresponding to the date/time information selected through the retransmission data selection window (i.e., the session ID stored in the storage unit 16 corresponding to the selected date/time information), the user ID and password input through the ID input window. It should be noted that, in some steps executed later (i.e., in S2206 and S2208), the MFP 10 transmits data to be transmitted to the function server 220 together with the session ID. Then, the function server 220 identifies to which service the data is related to in accordance with the received session ID.

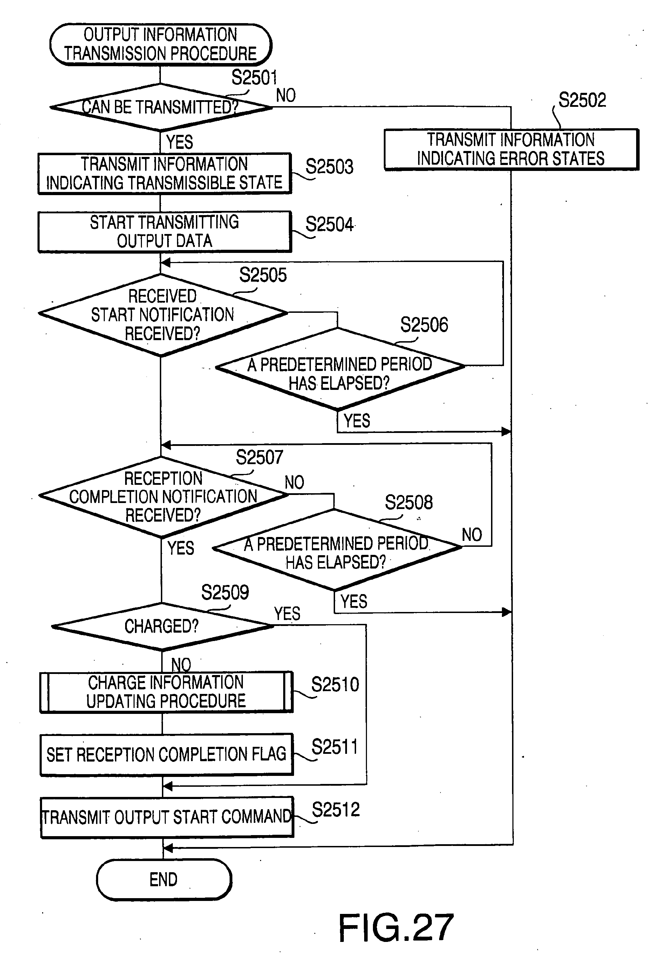

In S2202, the control receives the information transmitted from the function server 220 in response to the output command transmitted in S2201. The information received in S202 is the information indicating whether the function server 220 can transmits the output data. For example, if the transmitted password is wrong, or the output data corresponding to the transmitted session ID is not stored in the service output information storage unit 27, the information indicative of an error status is transmitted. It should be noted that the information is transmitted to the MFP 10 that issued the output command in S2502 or S2503 of an output information transmitting procedure (Fig. 27) which is executed by the control unit 221 of the function server 220.

Next, in S2203, the control judges whether the information received in S2202 indicates the error status. If the received information is indicative of the error status (S2203: YES), the control proceeds to S2204, and an error message is displayed on the display 52 of the operation panel 12a. Thereafter, the control finishes the output information transmission requesting procedure.

If the control determines that the received information is not indicates the error status (i.e., the output data can be transmitted), the control proceeds to S2205.

In S2205, control starts receiving the output data (e.g., print data or sound data) transmitted from the function server 220, and stores the received output data in the storage unit 16. It should be noted that the received output data is inhibited to be output until the output start command is received from the function server in S2209, which will be described later.

In S2206, control transmits a reception start notification indicating the reception of the output data is started to the function server 220. In S2207, control judges whether the reception of the output data has been completed (i.e., all the output data has been stored in the storage unit 16). If control determines the reception of the output data has been completed, control proceeds to S2208.

In S2208, control transmits the reception completion notification notifying that the reception of the output data has been completed to the function server 220. Then, in S2209, control receives the output start command transmitted from the function server 220 in response to the transmission of the reception completion notification transmitted in S2208. It should be noted that the output start command is transmitted to the MFP 10 that issued the reception completion notification in S2512 of output information transmitting procedure (Fig. 27) which is executed by the control unit 221 of the function server 220.

Next, in S2210, control outputs (e.g., printout of the print data, sound output of the sound data) the output data (e.g., the output data received from the function server 220) stored in the storage unit 16. Thereafter, control finishes the output information transmission requesting procedure.

### Output Information Deletion Requesting Procedure

Next, referring to Fig. 24, an output information deletion requesting procedure executed by the control unit 11 of the MFP 10 will be described. The output information deletion requesting procedure is started when the user selects the date/time information through the deletion data selection window (which appears similar to the window shown in Fig. 4) displayed on the display 52 of the operation unit 12a and further the user ID and password are input through the ID input window.

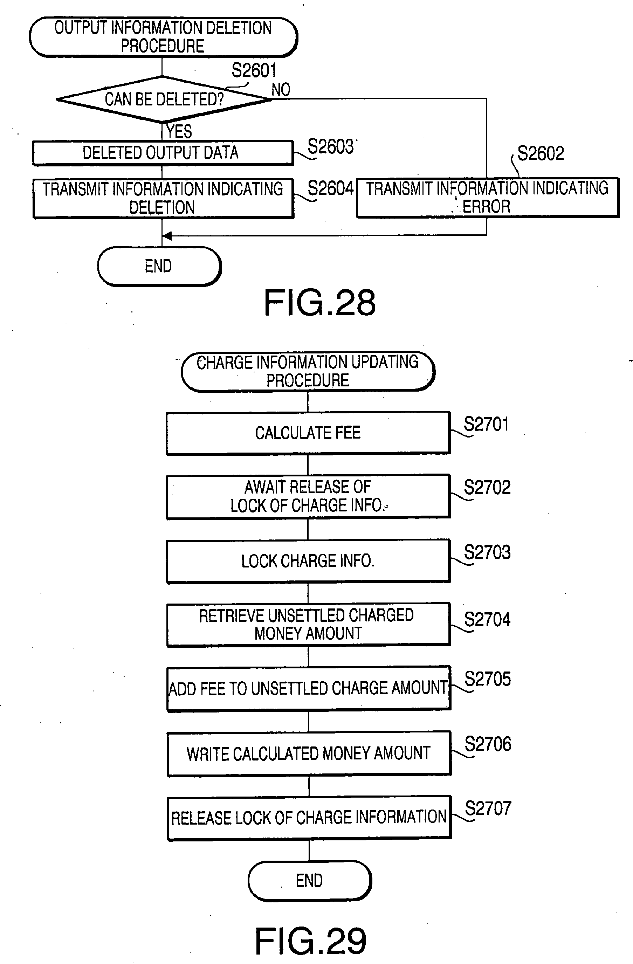

In S2302, the control receives the information transmitted from the function server 20 in response to the transmission of the deletion command in S2301. The information received in S2302 is indicative of whether the function server 220 is capable of deleting the output data. For example, if the transmitted password was wrong or the output data corresponding to the transmitted session ID was not stored in the service output information storage unit 227, information indicative of an error status is transmitted. It should be noted that the information is transmitted to the MFP 10 that issued the deletion command in S2602 or S2603 of the output information deleting procedure (Fig. 28) which is executed by the control unit 221 of the function server 220.

Next, in S2303, the control judges whether the information received in S2302 indicates the error status.

If the control determines that the information received in S2302 indicates the error status (S2303: YES), the control proceeds to S304 and displays an error message on the display 52 of the operation panel 12a. Thereafter, the control finishes the output information deletion requesting procedure.

If the control determines that the received information does not indicate the error status (but indicates that the output data was deleted), the control proceeds to S2305, and displays a message indicating completion of the deletion of the output data on the display 52 of the operation panel 12a.

In S2306, the control deletes the session ID and the date/time information corresponding to the deleted output data from among the session IDs and pieces of date/time information stored in the storage unit 16. Then, the control finishes the output information deletion requesting procedure.

Next, the translation copy service executed by the control unit 221 of the function server will be described referring to Fig. 25. The translation copy service is started when the service startup command is received from the MFP 10. It should be noted that the service startup command is transmitted in S2101 of the service usage procedure (Fig. 22) described above.

When the translation copy service is started, in S2401, the control generates a session ID for each service request and registers the same with the session management information storage unit 225 of the storage unit 223 as session management information. Specifically, as shown in Fig. 10, as the session management information, the session ID, the user ID, the file name, the service program name and an output start flag are stored in the session management information storage 225. The user ID here is the user ID transmitted together with the service startup command from the MFP 10 (i.e., the user ID of the user who requested the service). The file name here is the name of the output data to be transmitted to the MFP 10 for providing the service. The service program name is the name of the program corresponding to the requested service. The output start flag is a flag indicative of whether the output of the output data is started in the MFP 10 (0: before output; and 1: after output has been started).

In S2402, the control transmits the session ID generated in S2401, a parameter request command which requests the MFP 10 to set parameters necessary for the service, to the MFP 10. In S2403, the control receives parameters transmitted from the MFP 10 in response to the parameter request command transmitted in S2402. It should be noted that the parameters are transmitted in S2105 of Fig. 22 in the service usage procedure.

Next, in S2404, the control transmits an image input command that requests the MFP 10 for the image data of the original subjected to the translation copy service to the MFP 10.

Then in S2405, the control receives the image data (generated by reading the original using the reading unit 13 of the MFP 10) transmitted from the MFP 10 in response to the image input command transmitted in S404. It should be noted that the image data is transmitted in S2109 of the service usage procedure (Fig. 22).

In S2406, the control applies an OCR (Optical Character Recognition) process to the image data received in S2405 to recognize a text included in the image, and then translates the recognized text into a target language in the translation procedure based on the parameters received in S2403.

Further, in S2407, by setting a print layout for the text translated in S2406 to generate the output data (i.e., the print data indicating the image of the text after the translation is executed). Then, in S2408, the control stores the output data generated in S2407 in the service output information storage unit 227 of the storage unit 223. It should be noted that the output data is kept until the deletion request is issued by the MFP 10.

In S2409, control judges whether the output data can be transmitted. The output data cannot be transmitted if, for example, the password received together with the service startup command is wrong, control determines that the output data cannot be transmitted.

If control determines that the output data cannot be transmitted (S2409: NO), control finishes the translation copy service. If control determines that the output data can be transmitted (S2409: YES), control proceeds to S2410 and start transmitting the output data (print data) generated in S2407 to the MFP 10.

Next, in S2411, control judges whether reception start notification notifying that reception of the output data has been started is received from the MFP 10. The reception start notification is transmitted in S2112 of Fig. 22.

If control determines that the reception start notification has not been received (S2411: NO), control proceeds to S2412, where control judges whether a predetermined period has elapsed since the transmission of the output data was started in S2410. The predetermined period in S2412 is a period exceeding a duration from the start of transmission of the output data and reception of the reception start notification.

If control determines that the predetermined period has not elapsed (S2412: NO), control returns to S2411. If control determines that the predetermined period has elapsed (S2412: YES), control finishes the translation copy service. That is, if the transmission of the output data is started, but the reception start notification has not been received and the predetermined period has passed, control stops transmitting the output data.

If control determines that the reception start notification is received (S2411: YES), control proceeds to S2413. In S2413, control judges whether the reception completion notification, which is a notification indicating that the output data has been received from the MFP 10. It should be noted that the reception completion notification is transmitted in S2114 of Fig. 22.

If control determines that the reception completion notification has not been received (S2413: NO), control proceeds to S2414, and judges whether a predetermined period has elapsed since the reception start notification was received in S2412. The "predetermined period" here is a period longer than a normal duration from the reception of the reception start notification to the reception of the reception completion notification. It should be noted, however, the interval from the reception of the reception start notification and the reception of the reception completion notification varies depending on the size of the output data. Therefore, this judgment may be changed to measure a time period from completion of the transmission of the output data to reception of the reception completion notification.

If control determines that the predetermined period has not passed (S2414: NO), control proceeds to S2413. If control determines that the predetermined period has elapsed (S2414: YES), control fishes the translation copy service. That is, if the reception completion notification is not received although the reception start notification was received and a predetermined period has passed, the transmission of the output data is stopped.

If it is determined that the reception completion notification has been received in S2413, control proceeds to S2415 and executes the charge information updating procedure, which will be described in detail later with reference to Fig. 29.

In S2416, control sets the reception completion flag. Specifically, among the session management information stored in the session management information storage unit 25, control updates a value of the reception completion flag stored in relation with the ID of the user who requested the service from "0" to "1".

Next, in S2417, control transmits the output start command, allowing the output data to be output, to the MFP 10. Then, control finishes the translation copy service.

Next, the output information transmitting procedure executed by the control unit 221 of the function server 220 will be described with reference to Fig. 27. The output information transmitting procedure is started when the output command is received from the MFP 10. It should be noted that the output command is transmitted by the MFP 10 in S2201 of the output information transmission requesting procedure (Fig. 23) described above.

When the output information transmitting procedure is started, the control judges whether the output data can be transmitted in S2501. Specifically, for example, when the password received together with the output command was wrong or the output data corresponding to the session ID is not stored in the service output information storage unit 227 of the storage unit 223, the control determines that the output data cannot be transmitted.

If the control determines that the output data cannot be transmitted (S2501: NO), the control proceeds to S2502, and transmits error information to the MFP 10. Thereafter, the control finishes the output information transmitting procedure is finished.

If the control determines that the output data can be transmitted (S2501: YES), the control proceeds to S2503, and transmits information indicating that the output data can be transmitted to the MFP 10.

In S2504, control starts a procedure to transmit the output data stored in the service output information storage unit 27 to the MFP 10. Specifically, control refers to the session management information stored in the session management information storage unit 25, and based on the file name which is stored therein in relation to the session ID received together with the output command, control retrieves the output data corresponding to the session ID from the output data stored in the service output information storage unit 27, and transmits the same.

Next, in S2505, control judges whether the reception start notification, which is a notification indicating that the output data is started to be received, from the MFP 10. It should be noted that the reception start notification is transmitted in S2206 of the output information transmission requesting procedure (Fig. 23).

If control determines that the reception start notification has not been received (S2505: NO), control proceeds to S2506 and judges whether a predetermined period has passes since the transmission of the output data was started in S2504. If control determines that the predetermined period has not passed (S2506: NO), control returns to S2505. If control determines that the predetermined period has passed (S2506: YES), control finishes the output information transmission procedure. That is, if the reception start notification is not received although the predetermined period has passed since the transmission of the output data was started, the transmission of the output data is stopped.

If control determines that the reception start notification is received (S2505: YES), control proceeds to S2507, and judges whether the reception completion notification has been received from the MFP 10. The reception completion notification is transmitted in S2208 of Fig. 23.

If control determines that the reception completion notification has not been received (S2507: NO), control proceeds to S2508, and judges whether a predetermined period has passed since the reception start notification was received in S2505.

If the control determines that the predetermined period has not elapsed (S2508: NO), the control returns to S2507. If the control determines that the predetermined period has elapsed (S2508: YES), the control finishes the output information transmitting process. That is, if the predetermined period has elapsed since the transmission of the output data was started and the output start notification is received, the transmission of the output data is terminated.

However, if the control determines that the output start notification has been received (S2507: YES), the process proceeds to S2509. In S5209, the control determines whether the charging information updating procedure (Fig. 29) has been finished. Specifically, the control refers to the session management information stored in the session management information storage unit 225 to check the value of the output start flag which is stored in association with the session ID received together with the output start notification. If the control determines that the output start flag is "1 ", the control determines that the charging information updating procedure has been executed, while, when the control determines the output start flag is "0", the control determines that the changing information updating procedure has not been executed.

If the control determines that the charging information updating procedure has not been executed (S2509: NO), the control proceeds to S2510 and executes the charging information updating procedure. The charging information updating procedure itself will be described in detail later (Fig. 29).

In S2511, the control sets the output start flag. That is, the value of the output start flag which is stored in association with the user ID of the user who issued the service, among the session management information stored in the session management information storage unit 225, is set from "0" to "1 ". Then, the control proceeds to S2512.

If the control determines that the charging information updating procedure has been executed (S2509: YES), the control proceeds to S2512. That is, for the output data to which the charging information updating procedure has been applied, the charge information updating procedure will not be applied again.

In S2512, the control transmits the output start command allowing the output data to be output is transmitted to the MFP 10, and control finishes the output information transmission procedure.

Next, the output information deleting procedure executed by the control unit 221 of the function server 220 will be described with reference to Fig. 28. The output information deleting procedure is started when the deleting command is received from the MFP 10. It should be noted that the deleting command is transmitted in S2301 of the output information deletion requesting procedure (Fig. 24).

When the output information deleting procedure is started, the control judges whether the output data can be deleted in S2601. Specifically, when the password the control received together with the deleting command was wrong, or when the output data corresponding to the session ID is not stored in the service output information storage unit 227 of the storage unit 223, the control determines that the output data cannot be deleted.

If the control determines that the output data cannot be deleted (S2601: NO), the control proceeds to S2602, and transmits information indicating an error condition. Then, the control finishes the output information deleting procedure.

If the control determines that the output data can be deleted (S2601: YES), the control proceeds to S2603 and deletes the output data. Specifically, the control refers to the session management information stored in the session management information storing unit 25, and based on the file name in association with the session ID which was received together with the deleting command, the control deletes the output data corresponding to the session ID among the output data stored in the service output information storing unit 227.

In S2604, the control transmits information indicating that the output data has been deleted to the MFP 10. Thereafter, the control finishes the output information deleting procedure.

Next, the charging information updating procedure which is executed by the control unit 221 of the function server 220 with reference to Fig. 29 will be described. The charging information updating procedure is started when the deleting command is received from the MFP 10. It should be noted that the deleting command is transmitted in S2301 of the output information deletion requesting procedure (Fig. 24) described above.

When the charging information updating procedure is started, the control calculates the fee of the output data in S701. Specifically, the control calculates the fee based on the contents of the service, the size of the output data (e.g., the number of pages to be printed), and the like.

In S2702, referring to the charging information stored in the charging information storage unit 224, the control pauses until the rock information, which is stored in association with the user ID of the user who has made the request, is changed to "FALSE" (i.e., non-rocked status). When the rock information has changed to the "FALSE" state, the control proceeds to S2703. It should be noted that the user ID of the user who made the service request is determined based on the session management information stored in the session management information storage unit 225 and the session ID received from the MFP 10.

Then, the control retrieves unsettled charging amount stored in association with the user ID of the user who made the service request from the charging information stored in the charging information. Next, the control adds the charging amount of the output data calculated in S2701 to the unsettled charging amount retrieved in S2704.

Next, in S2705, the control writes the added amount calculated in S2705 as the unsettled charging amount (S706). That is, the control updates the unsettled charging amount. Lastly, the control rewrites the rock information, which was set to "TRUE" (i.e., rocked state) in S703 to "FALSE". That is, the control releases the rocked status of the charging information. Thereafter, the control finishes the charging information updating procedure.

As described above, according to the second embodiment, the MFP 10 notifies the function server 220 of the completion of reception of the output data (S2118). The function server 220 executes the charging procedure regarding the output data (S2414) when it receives the notification from the MFP 10 (S2413: YES), and executes the charging procedure with respect to the output data (S2415).

According to the above configuration, in comparison with a case where the charging procedure is executed after the output data has been output, the misbehavior can be prevented. That is, according to a configuration which starts the charging procedure after the output data has been completely output, by interrupting the outputting operation immediately before the output operation is completed, it becomes possible that a user obtain most part of the output but the charging procedure will not be executed.

According to the second embodiment described above, when the output of the output data is started, the charging procedure is executed. Therefore, it is ensured that for the output data, which is started to be output, the charging procedure is executed. Thus, the misbehavior as in the conventional configuration can be well prevented.

According to the second embodiment, regardless of whether the MFP 10 is capable of outputting the output data, when the output data has received by the MFP 10 (in other words, when all the data of the output data is stored in the storage unit 16), the charging procedure is executed, the misbehavior can be prevented. Further, since the storage unit 16 stored all of the output data, when the MFP 10 cannot receive the output data, thereafter, it can receive the output data based on the output data stored in the storage unit. It should be noted that the storage unit 16 is a non-volatile recording medium, even if the MFP 10 is powered OFF, the output data is retained.

According to the second embodiment, the output data stored in the function server 220 can be retransmitted to the MFP 10 upon request by the MFP 10 (see Figs. 23 and 27). In such a case, if the charging procedure has been executed for the retransmitted data, the charging procedure therefore will not be executed again (S2509). Therefore, according to the first embodiment, it is ensured that the data, for which the charging procedure is executed, is output, and no disadvantage will be given to the user of the MFP 10.

According to the printing system described above, whether reception of the output data has been completed is judged based on the reception completion notification transmitted from the MFP 10. Therefore, in the MFP 10, it is prevented to determine that the reception is completed although the reception of the output data has not been completed due to the communication error or the like.

The printing system according to the illustrative second embodiment is configured such that the output of the output data of the MFP 10 is inhibited until the output start command for the output data is transmitted from the function server 220 (i.e., until the charging procedure is executed). Therefore, the output data that is not charged will not be output.

It should be noted that the above-described illustrative second embodiment can be modified in various ways without departing from aspects of the invention. For example, in the printing system described above, whether the output data has been received by the MFP 10 is judged based on the reception completion notification output by the MFP 10. This configuration is only an example, and can be modified such that, when the function server 220 has finished transmitting the output data, the MFP 10 determines that the reception of the output data has been completed. With this configuration, whether the MFP 10 has finished receiving the output data can be recognized easily at the function server side 220.

Further, in the printing system according to the second embodiment, the fees are charged to each user of the MFP 10. This may be modified such that the fees are charged on device (i.e., MFP 10) basis. In such a configuration, the charging procedure can be performed only if the MFP 10 that issued the service request is known, which makes it unnecessary to require input operation of the user ID and password.

According to the printing system described above, the output data stored in the service output information storage unit 227 of the function server 200 is transmitted in response to the request from the MFP 10. This configuration is only an example, and can be modified in various ways. For example, in a case of a news providing service, the MFP 10 may request the function server 200 regularly (e.g., once a day) for the output data.

In the printing system according to the second illustrative embodiment, the output data stored in the service output information storage unit 227 is deleted by the input operation at the MFP 10. This configuration is only an example, and can be modified in a various ways. For example, the output data may be automatically deleted after a predetermined period has elapsed. For another example, the output data in the function server 220 may be deleted when the MFP 10 successfully received all the data, or the function server 220 may be configured not to retain the output data.

Further, in the printing system according to the second illustrative embodiment, the output data can be transmitted to the MFP 10 regardless of the unsettled charged money amount represented by the charge information stored in the charge information storage ;unit 224 of the function server 220. This configuration may be modified such that transmission of the output data to the MFP 10 is inhibited if the unsettled charged money amount exceeds a predetermined value.

In the above description of the printing system according to the second illustrative embodiment, the MFP 10 is described as the printing apparatus. It should be appreciated that the printing apparatus need not be the multi-functional apparatus, but any type of printing apparatuses (e.g., a printer, a facsimile machine, a copier, etc.) can be used optionally or alternatively.

## Claims

1. A contents providing system including a server and at least one client device, each of the server and the client device being capable of performing a data communication, the contents providing system being configured such that the server is capable of providing contents which can be printed on a recording medium at the client device,
wherein the client device comprises:
a contents requesting unit configured to request the server to provide the contents to the client device;
a contents printing unit configured to print out the contents provided by the server that received the request from the contents requesting unit on the recording medium; and
a contents judging unit configured to judge whether the contents are printed appropriately based on the contents printed by the contents printing unit,
wherein the contents requesting unit re-requests the server to provide the contents if the contents judging unit determines that the contents are not printed appropriately,
wherein the server comprises:
a charge processing unit configured to execute a charging procedure for a user of the client device after the client device has requested the server to provide the contents; and
a contents providing unit configured to provide the contents requested by the client device to the client device when the client device has requested for the contents,
wherein, when the client device request the server to provide the contents to the client device, if the client device is one to which the server has provided the contents through the contents providing unit before, the contents are provided to the client device without executing the charge procedure by the charge processing unit.

2. The contents providing system according to claim 1,
wherein the contents requesting unit is configured to request the server to provide the contents and to transmit data necessary for generating the contents to the server,
wherein the server further includes:
a contents generating unit configured to generate contents, when requested by the client device to provide the contents, based on the data necessary for generating the contents which is transmitted together with the request.

3. The contents providing system according to claim 2,
wherein the contents requesting unit is configured such that, when the client re-requests the server to provide the contents, the data necessary for generating the contents is not transmitted to the server,
wherein, if a request to provide the contents is received from the client device and the client device is one to which the contents previously generated was provided, the contents providing unit provides the contents previously generated for the client device again.

4. The contents providing system according to claim 2 or 3,
wherein, when the server is requested by the client device to provide the contents, the charge processing unit starts executing the charging procedure for the user of the client device after the data necessary for generating the contents that is transmitted together with the request has been normally received.

5. The contents providing system according to claim 4,
wherein, when the server receives the request to provide the contents to the client, the contents providing unit starts providing the contents, which is generated based on the data necessary for generating the contents, to the client device after the data necessary for generating the contents, which is transmitted together with the request, has been received.

6. The contents providing system according to claim 1, 2 or 3,
wherein the server further includes:
a charge notification unit that notifies the client device of a charged money amount if the charge procedure is executed after the contents have been provided to the client device,
the charge procedure by the charge processing unit being executed only when the client device to which the charged money amount was notified notifies that the contents will be printed on the recording medium,
wherein the client device further includes:
a print operation selection unit configured to allow the user to select whether the contents are to be printed on the recording medium based on the charged money amount notified of by the server after the client device first received the contents from the server that received the request made by the contents requesting unit; and
a print notification unit configured to notify the server that the selection has been made by the print operation selection unit to print the contents on the recording medium,
wherein, only when the printing of the contents on the recording medium has been selected by the print operation selection unit, the contents printing unit prints the contents on the recording medium.

7. The contents providing system according to any one of preceding claims,
wherein the contents providing unit is configured to provide the contents by transmitting the contents to the client device.

8. The contents providing system according to any one of claims 1-6,
wherein the contents being made accessible by the client device,
wherein the contents providing unit provides the contents to the client device by notifying the client device that the contents are accessible by the client,
wherein the client device further comprising:
an accessing unit configured to access the contents when notified by the contents providing unit that the contents are accessible, and
wherein the contents printing unit prints out the contents accessed by the accessing unit on the recording medium.

9. A client device for a contents providing system including a server and the client device, each of the server and the client device being capable of performing a data communication, the contents providing system being configured such that the server is capable of providing contents which can be printed on a recording medium at the client device, the server including a charge processing unit configured to execute a charging procedure for a user of the client device after the client device has requested the server to provide the contents, and a contents providing unit configured to provide the contents requested by the client device to the client device when the client device has requested for the contents, the server being configured such that, when the client device request the server to provide the contents to the client device, if the client device is one to which the server has provided the contents through the contents providing unit before, the contents are provided to the client device without executing the charge procedure by the charge processing unit,
wherein the client device comprises:
a contents requesting unit configured to request the server to provide the contents to the client device;
a contents printing unit configured to print out the contents provided by the server that received the request from the contents requesting unit on the recording medium; and
a contents judging unit configured to judge whether the contents are printed appropriately based on the contents printed by the contents printing unit,
wherein the contents requesting unit re-requests the server to provide the contents if the contents judging unit determines that the contents are not printed appropriately,

10. A server for a contents providing system including the server and at least one client device, each of the server and the client device being capable of performing a data communication, the contents providing system being configured such that the server is capable of providing contents which can be printed on a recording medium at the client device, the client device including a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit, the contents requesting unit being configured to re-requesting the server to provide the contents if the contents judging unit determines that the contents are not printed appropriately,
wherein the server comprises:
a charge processing unit configured to execute a charging procedure for a user of the client device after the client device has requested the server to provide the contents; and
a contents providing unit configured to provide the contents requested by the client device to the client device when the client device has requested for the contents,
wherein, when the client device request the server to provide the contents to the client device, if the client device is one to which the server has provided the contents through the contents providing unit before, the contents are provided to the client device without executing the charge procedure by the charge processing unit.

11. A computer-readable medium having a program stored thereon, said program comprising a computer readable instructions that cause a computer to serve as a client device for a contents providing system including a server and the client device, each of the server and the client device being capable of performing a data communication, the contents providing system being configured such that the server is capable of providing contents which can be printed on a recording medium at the client device, the server including a charge processing unit configured to execute a charging procedure for a user of the client device after the client device has requested the server to provide the contents, and a contents providing unit configured to provide the contents requested by the client device to the client device when the client device has requested for the contents, the server being configured such that, when the client device request the server to provide the contents to the client device, if the client device is one to which the server has provided the contents through the contents providing unit before, the contents are provided to the client device without executing the charge procedure by the charge processing unit,
wherein the client device includes:
a contents requesting unit configured to request the server to provide the contents to the client device;
a contents printing unit configured to print out the contents provided by the server that received the request from the contents requesting unit on the recording medium; and
a contents judging unit configured to judge whether the contents are printed appropriately based on the contents printed by the contents printing unit,
wherein the contents requesting unit re-requests the server to provide the contents if the contents judging unit determines that the contents are not printed appropriately,

12. A computer readable medium having a computer readable instructions stored thereon, said instructions comprising a computer readable instructions that cause a computer to serve as a server for a contents providing system including the server and at least one client device, each of the server and the client device being capable of performing a data communication, the contents providing system being configured such that the server is capable of providing contents which can be printed on a recording medium at the client device, the client device including a contents requesting unit configured to request the server to provide the contents to the client device, a contents printing unit configured to print out the contents provided by the server that received the request from the contents requesting unit on the recording medium, and a contents judging unit configured to judge whether the contents are printed appropriately based on the contents printed by the contents printing unit, the contents requesting unit being configured to re-requesting the server to provide the contents if the contents judging unit determines that the contents are not printed appropriately,
wherein the server comprises:
a charge processing unit configured to execute a charging procedure for a user of the client device after the client device has requested the server to provide the contents; and
a contents providing unit configured to provide the contents requested by the client device to the client device when the client device has requested for the contents,
wherein, when the client device request the server to provide the contents to the client device, if the client device is one to which the server has provided the contents through the contents providing unit before, the contents are provided to the client device without executing the charge procedure by the charge processing unit.

13. A contents providing system including a printing device capable of printing contents data on a recording medium, a server capable of performing a data communication with the printing device, the server being configured to transmit the contents data to the printing device,
wherein the printing device includes:
a storage unit configured to store entire contents data received from the server; and
a printing unit configured to print out the contents stored in the storage unit,
wherein the server includes:
a contents data transmitting unit configured to transmit the contents data to the printing device;
a judging unit configured to judge whether reception of the contents data by the printing unit has been completed; and
a charge processing unit that executes a charging procedure regarding the contents data transmitted by the contents data transmitting unit when the judging unit determines that the reception of the contents data by the printing unit has been completed.

14. The contents providing system according to claim 13,
wherein the judging unit determines that the reception of the contents data by the printing unit has been completed when transmission of the contents data to the printing unit has been completed.

15. The contents providing system according to claim 13,
wherein the printing device includes a reception notifying unit configured to notify the server of completion of reception of the contents data, and
wherein the judging unit determines that the reception of the contents data by the printing unit has been completed when the notification from the reception notifying unit is received.

16. The contents providing system according to claim 13, 14 or 15,
wherein the server includes a print allowing unit that transmits print allowing data for allowing printing of the contents on the recording medium when the charging procedure regarding the contents data is executed by the charge process unit, and
wherein the printing unit is configured to be enabled to print the contents for which the charging procedure has been executed after the print allowing data has been received form the server.

17. The contents providing system according to any one of claims 13-16,
wherein the storage unit includes a non-volatile storage medium.

18. The contents providing system according to claim 13,
wherein the entire contents data is transmitted from the server in one transmission operation.

19. A printing device for a contents providing system including the printing device capable of printing contents data on a recording medium, a server capable of performing a data communication with the printing device, the server being configured to transmit the contents data to the printing device, the server including a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed,
wherein the printing device includes:
a storage unit configured to store all the contents data received from the server; and
a printing unit configured to print out the contents stored in the storage unit,

20. A server for a contents providing system including a printing device capable of printing contents data on a recording medium, the server capable of performing a data communication with the printing device, the server being configured to transmit the contents data to the printing device, the printing device including a storage unit configured to store all the contents data received from the server, and a printing unit configured to print out the contents stored in the storage unit,
wherein the server includes:
a contents data transmitting unit configured to transmit the contents data to the printing device;
a judging unit configured to judge whether reception of the contents data by the printing unit has been completed; and
a charge processing unit that executes a charging procedure regarding the contents data transmitted by the contents data transmitting unit when the judging unit determines that the reception of the contents data by the printing unit has been completed.

21. A computer-readable medium having computer readable instructions stored thereon, said instructions cause a computer to serve as a printing device for a contents providing system including the printing device capable of printing contents data on a recording medium, a server capable of performing a data communication with the printing device, the server being configured to transmit the contents data to the printing device, the server including a contents data transmitting unit configured to transmit the contents data to the printing device, a judging unit configured to judge whether reception of the contents data by the printing unit has been completed, and a charge processing unit that executes a charging procedure regarding the contents data transmitted by the contents data transmitting unit when the judging unit determines that the reception of the contents data by the printing unit has been completed,
wherein the printing device includes:
a storage unit configured to store all the contents data received from the server; and
a printing unit configured to print out the contents stored in the storage unit.

22. A computer readable medium having computer readable instructions stored thereon, said instructions causing a computer to serve as a server for a contents providing system including a printing device capable of printing contents data on a recording medium, the server capable of performing a data communication with the printing device, the server being configured to transmit the contents data to the printing device, the printing device including a storage unit configured to store all the contents data received from the server, and a printing unit configured to print out the contents stored in the storage unit,
wherein the server includes:
a contents data transmitting unit configured to transmit the contents data to the printing device;
a judging unit configured to judge whether reception of the contents data by the printing unit has been completed; and
a charge processing unit that executes a charging procedure regarding the contents data transmitted by the contents data transmitting unit when the judging unit determines that the reception of the contents data by the printing unit has been completed.
